# EUROPÄISCHE PATENTSCHRIFT

(11) **EP 3 305 505 B1**
(45) Veröffentlichungstag und Bekanntmachung des Hinweises auf die Patenterteilung: **06.07.2022**
(21) Anmeldenummer: 17189853.9
(22) Anmeldetag: 07.09.2017
(51) Int. Cl.: B29C 51/44, B65G 57/03, B65G 57/16

(54) **STAPELSTATION FÜR EINE THERMOFORMANLAGE**
STACKING STATION FOR A THERMOFORMING ASSEMBLY
STATION D'EMPILAGE POUR UNE INSTALLATION DE THERMOFORMAGE

(30) Priorität: 30.09.2016 DE 102016219074
(43) Veröffentlichungstag der Anmeldung: 11.04.2018
(73) Patentinhaber: Rudholzer Technologien GmbH, 83317 Teisendorf (DE)
(72) Erfinder: Bauernschmid, Peter, 83317 Teisendorf (DE); Rudholzer, Heinrich, 83395 Freilassing (DE); Höglauer, Tobias, 83395 Freilassing (DE); Giehl, Horst, 83374 Traunwalchen (DE)
(74) Vertreter: Grünecker Patent- und Rechtsanwälte PartG mbB

(56) Entgegenhaltungen:
- EP-A1- 1 236 665
- BE-A5- 1 005 832
- DE-A1-102007 018 440
- JP-B2- 2 923 326

## Beschreibung

Die vorliegende Erfindung betrifft generell das Gebiet der Herstellung von Produkten durch unter Wärme erfolgender Verformung von verformbaren Grundstoffen in einer Thermoformanlage, wobei die Produkte nach erfolgter Formung und Stanzung in einer geeigneten Weise zu stapeln sind.

In vielen Lebensbereichen werden Produkte benötigt, die durch thermoplastisches Verformen von Kunststoffen hergestellt sind. Zu derartigen Produkten gehören beispielsweise diverse Verpackungsmaterialien, etwa in Form von Bechern, Schalen, u. dgl. Als Grundmaterial für die Herstellung derartiger Produkte dienen in der Regel Folienbahnen oder Platten aus Kunststoff, die der Thermoformanlage zugeführt werden und darin in mehreren Schritten bearbeitet werden. In den diversen Arbeitsschritten, die in unterschiedlichen Stationen der Thermoformanlage durchgeführt werden, wird das Grundmaterial zunächst aufgeheizt und damit in einen Zustand versetzt, in welchem es mit einem geeigneten Werkzeug verformt werden kann. Nach der Aufheizung des Grundmaterials erfolgt die Formung des gewünschten Produkts, das dann gestanzt und in einem weiteren Schritt ausgedrückt und gestapelt wird. Typischerweise werden die so erzeugten Stapel beispielsweise weiterverarbeitet, indem sie etwa in Folienschläuche verpackt werden oder in mit Folie ausgekleidete Kartons eingebracht werden, um die Produkte hygienisch einwandfrei lagern oder transportieren zu können. Eine penible Einhaltung hygienischer Verhältnisse ist insbesondere notwendig, wenn die Produkte, was häufig vorkommt, für die Lebensmittelindustrie verwendet werden. Die Form der Produkte ist dem entsprechenden Zweck angepasst, so dass eine große Bandbreite unterschiedlicher Formen typischerweise in Thermoformanlagen hergestellt wird. Dabei können auch Deckel und Schalen mit einer oder mehreren Vertiefungen, etwa für Pralinen sowie becherförmige Produkte, etwa für Joghurt, oder tassenförmige Produkte, etwa für Fleisch oder Wurst, hergestellt werden.

Generell ist die Herstellung derartiger Produkte in Thermoformanlagen ein bewährter Prozess in der Industrie, wobei dennoch ständig großer Verbesserungsbedarf besteht, da insbesondere jegliche Steigerung der Effizienz derartiger Thermoformanlagen zu einer entsprechenden Verringerung des Preises führen kann, was insbesondere für die Herstellung von Verpackungsprodukten in großen Mengen ein entscheidender ökonomischer Aspekt sein kann. Das heißt, vom Eingang des Ausgangsmaterials bis zur Ausgabe der gestapelten Produkte sollen die einzelnen Prozessschritte so aufeinander abgestimmt sein, dass mit möglichst geringem apparativem Aufwand, geringem Platzverbrauch der Anlage u. dgl. das gewünschte Produkt in möglichst kurzen Taktzeiten in der erforderlichen Form entnommen werden kann. Insbesondere ist für eine zuverlässige Weiterverarbeitung der Produkte ein effizientes Stapeln der fertiggestellten Produkte erforderlich, wobei insbesondere darauf zu achten ist, dass die Produkte in Stapelform zuverlässig weiterverarbeitet werden können, beispielsweise mit entsprechenden Nahrungsmitteln u. dgl. befüllt werden können.

Dazu läßt sich im Fachbuch "Thermoformen in der Praxis" der Firma Illig, erschienen im Hansa Verlag, folgende Anleitung im Hinblick auf die Stapelung der Formteile entnehmen:
"*Die Formteile müssen ineinanderpassen, ohne zu verklemmen. Wenn Formteile große Wandschrägen haben, können diese ohne spezielle Stapelnoppen gestapelt und entstapelt werden. Je kleiner die Seitenwandschrägen, desto wichtiger ist ein zu realisierender Abstand zwischen den zu stapelnden Formteilen."*

Ferner ist dort ausgeführt:
*"Bei mehrreihigen Werkzeugen können die Stapelnoppen unterschiedlich ausgeführt werden. Die Position der Stapelnoppen ist in den in Durchlaufrichtung aufeinanderfolgenden Formteilen verschieden angeordnet."*

Das heißt, bei der Herstellung der Produkte bzw. Formteile werden in der Regel mehrere Produkte gleichzeitig durch thermoplastisches Verformen hergestellt, die dann später in geeigneter Weise zu stapeln sind. Bei der thermoplastischen Verformung der Ausgangsmaterialien durch die geeigneten Werkzeuge werden entsprechende Stapelnoppen mitgeformt, die eine gleichmäßige und zuverlässige Stapelung der Produkte ermöglichen. Wenn zwei oder mehr Produktreihen pro Press- und Stanzvorgang erzeugt werden, werden häufig, wie zuvor beschrieben, zwei unterschiedliche Formwerkzeuge verwendet, die Stapelnoppen an unterschiedlichen Positionen besitzen, so dass im Prinzip zwei "unterschiedliche" Produkte während des gleichen Formungsschrittes erzeugt werden. Bei der nachfolgenden Vereinzelung der Produkte wird dann ein Ablauf implementiert, in welchem eine erste Art von Produkten, also von Produkten, die die Stapelnoppen an bestimmten Positionen haben, abwechselnd mit Produkten einer zweiten Art gestapelt werden, die daher ihre Stapelnoppen an einer anderen Position haben, so dass ein genauer Stapelabstand zwischen den beiden unterschiedlichen Produktarten aufgrund der unterschiedlichen Positionen der Stapelnoppen gewährleistet ist, ohne dass sich die Stapelnoppen beider Produktarten gegenseitig behindern. Dieses Prinzip der Herstellung "unterschiedlicher" Produkte läßt sich auch auf drei oder mehr "Produktarten" erweitern, wobei dies von der akzeptablen Komplexität einer nachfolgenden Stapelstation abhängt, die beispielweise die "unterschiedlichen" Produktarten zu einem einzigen Stapel zusammenführt, der beispielsweise die Abfolge A-B oder A-B-C aufweist, wenn etwa drei Reihen des ansonsten gleichen Produktes zu einem einzigen Stapel zusammengeführt werden sollen. Das heißt, in der Stapelstation werden die Produkte übereinander geschoben und gestapelt, wobei durch die wechselnden Stapelnoppenpositionen zwischen jeweils zwei aufeinanderfolgenden Produkten oder auch drei aufeinanderfolgenden Produkten ein präziser Stapelabstand beibehalten wird, so dass kein Verklemmen der Produkte auftritt.

Diesbezüglich beschreibt die DE 8 318 156 U1 eine Anordnung für eine Wechselstapelung, in der unterschiedlich ausgeformte Produkte hergestellt werden, die nacheinander einreihig nach oben gestapelt werden.

In der WO2014/146639 A1 wird eine Stapelstation für dreireihige Produkte beschrieben, so dass eine Abfolge A-B-C aufgrund dreier unterschiedlicher Positionen der Stapelnoppen erreicht werden kann, wobei die Stapel über eine Kante umgelegt und dann horizontal weitergestapelt werden. Damit werden zwar die Produkte in einer günstigen Anordnung für die weitere Bearbeitung bereitgestellt, jedoch ist das Stapeln insgesamt mit einem relativ großen Platzaufwand verknüpft und es sind mehrere Prozessschritte bzw. Takte erforderlich, um die Produkte in der gewünschten Art entnehmen zu können, so dass ggf. die Effizienz der gesamten Thermoformanlage beeinträchtigt wird.

In der EP 1 747 875 B1 ist eine Aufnahmeplatte beschrieben, die zwischen dem Mehrfachformwerkzeug und der Stapelstation einer Thermoformanlage vorgesehen ist, die durch die Fähigkeit pro Anlagentakt um 180° schwenkbar zu sein, eine effizientere Überführung der geformten Produkte in die Stapelstation ermöglicht.

Die DE 10/2005/026687 beschreibt ein Verfahren und eine Vorrichtung zum Stapeln von tiefgezogenen Artikeln, wie Becher, wobei die Stapelstation in zwei Achsen schwenkbar und mit mehreren Körben bestückt ist. Durch die mehreren Körbe und die Schwenkfähigkeit der Stapelstation ist es möglich, in verschiedenen Positionen der Körbe entweder weitere Bearbeitungsschritte vorzunehmen oder durch weiteres Schwenken die Produkte schließlich auszuschieben. Durch diesen technischen Aufbau ist ein großer Platzbedarf erforderlich, während die Stapelung der Produkte, beispielsweise in Form von A-B-Stapeln nicht möglich ist.

Die Druckschrift EP 1 236 665 A1 offenbart ein Verfahren und eine Vorrichtung zur Handhabung thermogeformter Objekte (Deckel oder Behälter), insbesondere für eine Thermoformanlage mit Formungs- und Stanzformen. Dabei weisen die zu stapelnden Deckel oder Behälter wenigstens drei Vorsprünge auf, die als Stapelabstandshalter dienen und wobei wenigstens ein Vorsprung nicht spiegelsymmetrisch bzgl. einer zentralen Spiegelachse (m-m) des betreffenden Behälters und Deckels angebracht ist. Die Vorrichtung enthält, in dieser Reihenfolge, eine Empfangsstation für einen Behälter oder Deckel oder einen geformten Satz von Behältern oder Deckeln, eine Stapel- oder Bearbeitungsstation für die Behälter oder Deckel, eine Stapelstation für die Behälter oder Deckel, ein Mittel zum Überführen der Behälter oder Deckel von der Empfangsstation zu der Stapelstation durch alle Bearbeitungs- oder Handhabungsstationen. Ferner ist mindestens eine der Handhabungsstation derart vorgesehen, dass sie ein Handhabungsmittel aufweist, das jeden zweiten geformten Satz von Behältern oder Deckeln vor oder während ihrer Überführung zu der Stapelstation um einen vorbestimmten Winkel verdreht, wodurch Stapel von Deckeln oder Behältern erzeugt werden, bei denen die Stapel-Abstandshalter eines Behälters oder Deckels relativ zu denen des nächsten Behälters oder Deckels in Drehrichtung versetzt sind.

Ausgehend von der zuvor beschriebenen Sachlage ist es eine Aufgabe der vorliegenden Erfindung, insbesondere den Vorgang des Stapelns von Produkten in einer Stapelstation effizienter zu gestalten.

Erfindungsgemäß wurde diesbezüglich erkannt, dass eine Effizienzsteigerung beim Stapelvorgang dazu beitragen kann, dass beispielsweise eine zeiteffizientere Nutzung der Thermoformanlage möglich ist und/oder der Platzbedarf für das Stapeln der Produkte reduziert werden kann und/oder die Anzahl der Bauteile, die zur Stapelung einer gewissen Art von Produkten erforderlich ist, kleingehalten werden kann. Insbesondere liegt ein Aspekt der vorliegenden Erfindung darin, dass nach dem Aufheizen, Verformen und Stanzen der Produkte das Ausdrücken der noch an Stegen miteinander verbundenen Produkte als Teil eines Stapelvorgangs erfolgt, wobei, unabhängig von der Richtung, in der das Ausdrücken der Produkte erfolgt, eine Verdrehung der Produkte um eine Stapelrichtung herum hervorgerufen wird, so dass auch bei gleichen Produkten, d.h. bei Produkten, für die Abstandsnoppen an gleichen Positionen vorgesehen sind, ein Drehwinkelversatz erzeugt wird, so dass die Herstellung "unterschiedlicher" Produkte nicht erforderlich ist, wobei die Verdrehung der Produkte durch eine Zwischenstapelaufnahme bewerkstelligt wird.

In einem Aspekt der vorliegenden Erfindung ist daher eine Stapelstation für eine Thermoformanlage mit den Merkmalen des Anspruchs 1 bereitgestellt.

Durch diese Ausbildung der Stapelstation kann unabhängig von der Art des Produkts, auch bei identischem ersten und zweiten Produkt, die in einer Stapelrichtung zu stapeln sind, gewährleistet werden, dass eine Verdrehung, d.h. ein Winkelversatz, um die Stapelrichtung herum, die also als Drehachse für den Winkelversatz zu betrachten ist, erzeugt werden kann. Selbst wenn daher die Stapelnoppen jeweils an identischen Positionen während der thermoplastischen Herstellung der Produkte liegen, kann dennoch eine unterschiedliche Position der Stapelnoppen für das erste Produkt und das über dem ersten Produkt zu stapelnde zweite Produkt erhalten werden. Bei dieser Anordnung, in der zwei aufeinanderfolgende zu stapelnde Produkte einen Drehwinkelversatz erhalten, wird somit eine Stapelfolge A-B ermöglicht. Es lassen sich jedoch ein oder mehrere weitere Drehwinkelversätze für ein oder mehrere weitere folgende zu stapelnde Produkte erzeugen, so dass auch bei Bedarf eine komplexere Stapelfolge erreichbar ist, wenn etwa prinzipiell unterschiedliche Produkte in einem gleichen Arbeitsschritt erzeugt werden, die dann mit einem gewünschten Winkelversatz gestapelt werden. Auch generell unsymmetrische Produkte können in geeigneter Weise über mehrere Stapellagen hinweg mit Versatz angeordnet werden, so dass eine letztlich gewünschte Stapelfolge erhalten wird.

In einer vorteilhaften Ausführungsform weist die Stapelstation eine Stapelaufnahme auf, die zur Erzeugung des Drehwinkelversatzes um eine zur Stapelrichtung parallele Drehachse drehbar ist. In dieser Ausführungsform ist die Stapelaufnahme vorgesehen, etwa in Form eines Stapelkorbes, u. dgl., die so drehbar ist, dass der gewünschte Winkelversatz erhalten wird. Dabei können mehrere Reihen an Produkten, die typischerweise in einem gleichen Arbeitstakt erzeugt werden, gleichzeitig in geeigneter Weise durch Drehung der Stapelaufnahme mit dem gewünschten Winkelversatz gedreht werden. Beispielsweise ist es damit möglich, in Abhängigkeit der Drehsymmetrie der auf der Stapelaufnahme anzuordnenden Reihen von Produkten einen geeigneten Drehwinkelversatz einzustellen. Das heißt, wenn beispielsweise pro Arbeitstakt mehrere Reihen an Produkten erzeugt werden und in jeder Reihe die Anzahl der nebeneinanderliegenden Produkte nicht der Anzahl der Reihen entspricht, so dass keine quadratische Grundform erhalten wird, kann in diesem Fall eine Drehung um 180° der gesamten Stapelaufnahme dazu führen, daß die weitere Bearbeitung, etwa das Ausdrücken der Produkte, ohne Modifizierung des Vorgangs des Ausdrückens erfolgen kann, aber dennoch einen Winkelversatz, etwa eben 180°, erhalten wird. Dabei sind die Abstandsnoppen derart positioniert, dass eine Drehung um 180° auch zu einer geänderten Position der Abstandsnoppen führt. In anderen Anordnungen kann die Stapelaufnahme, d.h. die darauf anzuordnenden Produkte, eine andere Symmetrie, haben, etwa 90°, 60°, u. dgl., so dass bei der weiteren Verarbeitung keine Modifizierung der Prozesse erforderlich ist, aber dennoch der gewünschte Winkelversatz erhalten wird. Die Drehung der Stapelaufnahme führt also zu dem gewünschten Winkelversatz und erlaubt einen äußerst platzsparenden mechanischen Aufbau, wobei auch insgesamt ein geringer apparativer Aufwand zur Erzeugung der Drehbewegung erforderlich ist.

In einer weiteren vorteilhaften Ausführungsform weist die Stapelstation ferner eine Positioniereinrichtung auf, die zur Führung und Positionierung des ersten und des zweiten Produkts dient. Dabei ist die Positioniereinrichtung ausgebildet, eine relative Drehung zwischen dem ersten Produkt und dem zweiten Produkt vor Kontakt des ersten und des zweiten Produkts zu erzeugen. Die Positioniereinrichtung dient also zur Führung des ersten und des zweiten Produkts während des Stapelns in der Stapelrichtung, so dass eine exakte Positionierung des ersten und des zweiten Produkts entlang der Stapelrichtung gewährleistet ist. Gleichzeitig ist die Positioniereinrichtung ausgebildet, einen gewünschten Winkelversatz zwischen dem ersten und dem zweiten Produkt zu erzeugen, indem entsprechende technische Mittel vorgesehen sind, die eine relative Drehung zwischen dem ersten Produkt und dem zweiten Produkt vor ihrem Kontakt miteinander ermöglichen. Der gewünschte Winkelversatz kann beispielsweise dadurch hervorgerufen werden, daß das erste Produkt, das beispielsweise bereits auf einem vorhergehenden Produkt gestapelt ist, gedreht wird, während in anderen Ausführungsvarianten das zweite Produkt vor dem Kontakt mit dem ersten Produkt entsprechend gedreht wird. In weiteren Ausführungsvarianten können beide Produkte gleichzeitig oder nacheinander gedreht werden, um somit den endgültig gewünschten Drehwinkelversatz zu erhalten. Zur Erzeugung der jeweiligen Drehung des ersten und/oder des zweiten Produkts sind in der Positioniereinrichtung entsprechende technische Mittel, etwa in Form einer oder mehrerer angetriebener Walzen, Luft- und/oder Gas-Düsen zum Anblasen der Produkte, u. dgl., vorgesehen.

Das heißt, in einer vorteilhaften Ausführungsvariante ist die Positioniereinrichtung mit einer Gasaustrittsdüse versehen, die so dimensioniert und ausgerichtet ist, daß die relative Drehung zumindest teilweise durch Anblasen erzeugt wird. In dieser Ausführungsvariante ist somit ein effizienter "Antrieb" implementiert, der beispielsweise ohne direkten Kontakt mit einer weiteren mechanischen Komponente ein Drehmoment auf das erste und/oder zweite Produkt ausüben kann, um eine gewisse Verdrehung um die Stapelrichtung herum hervorzurufen. Während der Erzeugung dieses Drehmoments können das erste und/oder das zweite Produkt dabei in Kontakt mit entsprechenden Führungselementen, etwa Führungsstangen, u. dgl. sein, so dass trotz der Ausübung des Drehmoments eine zuverlässige Führung und damit Positionierung entlang der Stapelrichtung gewährleitet ist. In anderen Varianten kann die Drehung des entsprechenden Produkts in einer Phase erfolgen, in der nahezu kein mechanischer Kontakt zu anderen Komponenten vorhanden ist, etwa während einer kurzen Freifallphase, u. dgl., wobei das Anblasen des entsprechenden Produkts dennoch so erfolgt, daß nahezu keine laterale Verschiebung in Bezug auf die Stapelrichtung hervorgerufen wird. Dies kann beispielsweise bewerkstelligt werden, indem zwei oder mehr Gas- bzw. Luftströme so auf das zu drehende Produkt gelenkt werden, daß im Mittel keine laterale Verschiebung bewirkt wird.

In einer weiteren vorteilhaften Ausführungsform weist die Positioniereinrichtung mindestens ein angetriebenes steuerbar drehbares Führungselement auf. Das heißt, in dieser Variante dient das Führungselement nicht nur zur lateralen Positionierung des entsprechenden Produkts, sondern kann auch durch mechanischen Kontakt mit dem Produkt ein entsprechendes Drehmoment ausüben, so dass eine gewünschte Drehung um die Stapelrichtung hervorgerufen wird. Beispielsweise werden häufig Führungsstangen eingesetzt, um die laterale Positionierung der gestapelten Produkte zu gewährleisten. Durch das Vorsehen zumindest einer angetriebenen Führungsstange, wobei die anderen Führungsstangen, beispielsweise bei Bedarf frei drehbar sein können, läßt sich somit ein gewünschter Drehwinkelversetz hervorrufen. Dabei sind Ausführungsformen vorgesehen, in denen das erste Produkt, das bereits Teil des Stapels ist, gedreht wird, während in anderen Ausführungsvarianten das zweite Produkt, das bereits mit dem Führungselement in Kontakt ist, aber noch nicht mit dem ersten Produkt in Kontakt ist, gedreht wird. Dabei kann das Führungselement so aufgebaut sein, dass es nur während einer gewissen Längserstreckung entlang der Stapelrichtung angetrieben ist, während ein nachfolgender Teil des Führungselements kein Drehmoment ausübt. Auf diese Weise können die bereits gestapelten Produkte in ihrer Position verbleiben, während das als nächstes zu stapelnde Produkt in gewünschter Weise verdreht wird. In anderen Ausführungsvarianten können sowohl der bereits vorliegende Stapel als auch das zu stapelnde nächste Produkt entsprechend gedreht werden, so dass durch die Summe der beiden Drehbewegungen der gewünschte Winkelversatz erhalten wird.

In einer weiteren vorteilhaften Ausführungsform umfasst die Stapelstation ferner eine Ausdrückvorrichtung, die ausgebildet ist, das erste und das zweite Produkt sequentiell aus jeweiligen Indizes auszudrücken und das erste und/oder zweite Produkt zu drehen. In dieser Variante wird die Ausdrückvorrichtung verwendet, um zumindest einen Teil des gewünschten Drehwinkelversatzes zu erzeugen. Durch diese Art der Erzeugung des Drehwinkelversatzes ergibt sich eine äußerst platzsparende und zeiteffiziente Vorgehensweise, da beispielsweise die standardmäßige Taktung der Stapelstation beibehalten werden kann. Das heißt, in vorteilhaften Ausführungsformen kann der Drehwinkelversatz während des Taktes des Ausdrückens der Produkte erhalten werden, so dass kein zusätzlicher Takt erforderlich ist und insbesondere auch die Beschickung der Stapelstation nicht unterbrochen werden muss.

In einer Variante weist die Ausdrückvorrichtung mehrere Ausdrückarme auf und jeder Ausdrückarm ist so ausgebildet, daß er um die Stapelrichtung herum individuell drehbar ist. Auf diese Weise ergibt sich die Möglichkeit, daß Produkte, die sequentiell durch den gleichen Ausdrückarm gestapelt werden, einen gewünschten Winkelversatz erhalten, wobei, falls dies gewünscht oder erforderlich ist, sogar unterschiedliche Winkelversätze für die jeweiligen Ausdrückarme einstellbar sind. Dies kann beispielsweise vorteilhaft sein, wenn aus mehreren Stapeln, die den jeweiligen Ausdrückarmen entsprechen, weniger oder ein einzelner Stapel zu erzeugen ist, da dann beispielsweise entsprechende Abschnitte der anzahlreduzierten Stapel durch jeweilige unterschiedliche Drehwinkelversätze identifizierbar sind.

In einer weiteren vorteilhaften Ausführungsform weist die Ausdrückvorrichtung mehrere Ausdrückarme auf und umfasst ferner eine Antriebseinheit, die die mehreren Ausdrückarme kollektiv dreht. Durch diese Maßnahme gelingt es, den apparativen Aufwand für die Erzeugung zumindest eines Teils des Drehwinkelversatzes auf der Grundlage der Ausdrückarme relativ gering zu halten. Das heißt, es kann ein einzelner Drehteller vorgesehen werden, mit welchem die Ausdrückarme kollektiv gedreht werden, während eine entsprechende Anzahl an Produkten daran fixiert ist. Auch hier gilt, daß die Drehsymmetrie der Ausdrückarme berücksichtigt wird, um einen geeigneten Drehwinkelversatz einzustellen. Das heißt, wenn die Gesamtheit der Ausdrückarme beispielsweise eine 180°-Symmetrie besitzt, werden die entsprechenden Abstandsnoppen so erzeugt, dass sich für eine Drehung um 180° eine unterschiedliche Lage der Abstandsnoppen ergibt, so dass eben die Stapelung der jeweils um 180° versetzten Produkte einen zuverlässigen Stapelabstand ergibt. Abhängig vom gesamten Aufbau können die Ausdrückarme jedoch eine andere Drehsymmetrie aufweisen, so dass ein entsprechender anderer Drehwinkelversatz erzeugt wird. Dies ist äquivalent zu der zuvor beschriebenen Situation, in der beispielsweise die Stapelaufnahme entsprechend gedreht wird, um kollektiv für alle darauf befindlichen Produkte einen entsprechenden Drehwinkelversatz zu erzeugen.

In einer weiteren vorteilhaften Ausführungsform ist eine Schwenkvorrichtung vorgesehen, die ausgebildet ist, das erste und das zweite Produkte zumindest in einer Ebene senkrecht zur Stapelrichtung zu schwenken. Durch diese Anordnung gelingt es, generell die Effizienz des gesamten Arbeitsablaufs in der Stapelstation und auch in einer vorgeordneten Thermoformanlage und/oder auch in nachgeordneten Stationen zu verbessern. Beispielsweise können das erste und das zweite Produkt in eine geeignete Position geschwenkt werden, etwa zur weiteren Verarbeitung, zur besseren Temperierung, zum Transport zu einer anderen Bearbeitungsstation, u. dgl., während die Möglichkeit geschaffen wird, den zuvor von dem ersten und dem zweiten Produkt eingenommenen Platz anderweitig zu verwenden.

Diesbezüglich ist in einer weiteren vorteilhaften Ausführungsvariante die Stapelstation ausgebildet, einen weiteren Drehwinkelversatz um eine weitere Stapelrichtung zwischen einem dritten Produkt und einem in der weiteren Stapelrichtung über dem dritten Produkt zu stapelnden vierten Produkt zu erzeugen, wobei die Schwenkvorrichtung ausgebildet ist, das erste und zweite Produkt an eine erste Position zu schwenken und das dritte und vierte Produkt an eine zweite Position zu schwenken. Das heißt, die erfindungsgemäße Stapelstation dieser Ausführungsform schafft die Möglichkeit, Produkte unabhängig voneinander zu stapeln und an entsprechende geeignete Positionen zu schwenken, so dass bei geringem Platzbedarf dennoch ein hohes Maß an Flexibilität für die Verarbeitung gewährleistet ist. Beispielsweise kann die Stapelung des ersten und des zweiten Produkts sowie nachfolgender Produkte in gleicher Weise erfolgen, so dass der gewünschte Winkelversatz zwischen zwei aufeinanderfolgenden Produkten gewährleistet ist, während das dritte und das vierte Produkt und entsprechende weitere Produkte durch Schwenkung an einer Position liegen, in der beispielsweise ein Weitertransport zur weiteren Stapelung erfolgen kann, oder auch weitere Maßnahmen durchgeführt werden können, die im Rahmen der Erzeugung der Produkte erforderlich sind. Insbesondere gelingt es mit dieser Maßnahme, bei Erreichung einer maximalen Stapelhöhe für einen Stapel, der das erste und das zweite Produkt enthält, eine Position anzufahren, und die weitere Stapelung auf der Grundlage des dritten und des vierten Produkts fortzusetzen, ohne daß dazu eine Unterbrechung beispielsweise der Zufuhr von geformten und gestanzten Produkten erforderlich ist.

In einer weiteren vorteilhaften Ausführungsform umfasst die Stapelstation eine Inspektionseinrichtung, die ausgebildet ist, mindestens ein charakteristisches Merkmal des ersten und/oder zweiten Produkts während und/oder nach der Erzeugung des Drehwinkelversatzes zu erfassen. Das heißt, durch die Erzeugung eines Drehwinkelversatzes ergibt sich generell eine günstige Ausgangslage für die Inspektion der Produkte, da beispielsweise bei stationärer Lage der Inspektionseinrichtung ggf. ein größerer Erfassungsbereich, beispielsweise für optische Sensoren, u. dgl., bereitgestellt wird, da ein größerer Winkelbereich beispielsweise während der Erzeugung des Drehwinkelversatzes zugänglich ist. Aber auch bereits nach erfolgter Stapelung oder auch vor erfolgter Erzeugung des Drehwinkelversatzes ergibt sich ggf. abhängig von der Art der Mechanik, die zur Erzeugung des Drehwinkelversatzes angewendet wird, eine verbesserte Zugänglichkeit und/oder ein günstigerer Zeitablauf zur Ausführung von Untersuchungen im Hinblick auf die Qualität und/oder Positionierung und/oder andere Eigenschaften der Produkte.

In einer weiteren Ausführungsvariante ist eine Temperiereinrichtung vorgesehen, die ausgebildet ist, für das erste und/oder das zweite Produkt zumindest lokal eine Temperatursteuerung während und/oder nach der Erzeugung des Drehwinkelversatzes auszuführen. Das heißt, durch die Erzeugung des Drehwinkelversatzes ergibt sich generell ein verbesserter Wärmeaustausch mit der Umgebung, der zusätzlich verbessert werden kann, indem die Temperiereinrichtung vorgesehen wird. Dabei kann der Wärmeaustausch zur lokalen Temperatursteuerung vor, nach und/oder während der Erzeugung des Drehwinkelversatzes erfolgen, ohne daß in einigen Ausführungsformen zusätzliche Prozesszeit aufzuwenden ist. In anderen Ausführungsvarianten kann die Temperiereinrichtung gleichzeitig dazu dienen, einen gewünschten Winkelversatz zumindest teilweise zu erzeugen, indem beispielsweise ein Drehmoment unter Anwendung eines Luftstrahls oder Gasstrahls erzeugt wird. Durch dieses Anblasen ergibt sich eine deutlich effizientere Temperierung, wobei eben gleichzeitig durch die Erzeugung des Drehwinkelversatzes auch eine relativ große Fläche durch den einen oder die mehreren Luft- und/oder Gasstrahlen beaufschlagt wird.

Gemäß einem weiteren Aspekt der vorliegenden Erfindung wird eine Thermoformanlage bereitgestellt, die zur Herstellung von Produkten, d.h. Formteilen, dient. Die Thermoformanlage umfasst einen Form- und Stanzbereich, in welchem die Produkte mittels Wärme geformt und gestanzt werden und als Indizes von nicht-vereinzelten Produkten bereitgestellt werden. Die Thermoformanlage umfasst ferner die erfindungsgemäße Stapelstation mit den Merkmalen des Anspruchs 1, wie sie zuvor beschrieben ist, oder wie sie auch in der nachfolgenden detaillierten Beschreibung dargestellt wird, der die Indizes aus dem Form- und Stanzbereich zugeführt werden.

Wie zuvor bereits erläutert ist, übt insbesondere die Effizienzsteigerung beim Stapeln der hergestellten Produkte auch eine große Wirkung auf vorgeordnete und nachgeordnete Bereiche einer Thermoformanlage aus, so dass insgesamt die Effizienz, etwa im Hinblick auf erzeugte Produkte pro Zeiteinheit und Flächenbedarf, u. dgl., erhöht werden kann.

In weiteren Ausführungsformen ist eine Entnahmevorrichtung vorgesehen, die die Produkte aus der Stapelstation aufnimmt und die aufgenommenen Produkte für die Entnahme weitertransportiert. In vorteilhaften Ausführungsformen ist dabei die Entnahmevorrichtung so ausgebildet, daß die aufgenommenen Produkte umorientiert werden, so dass die Stapelrichtung von zumindest einigen aufgenommenen Produkten geändert wird. Eine derartige Ausbildung ist günstig, wenn beispielsweise relativ große Stapel zu bilden sind, da etwa die zuvor nach oben gestapelten Produkte in eine geeignete Lage gebracht werden können, etwa in die horizontale Lage, um dann in effizienterer Weise weitergestapelt und transportiert zu werden. Insbesondere wenn die Produkte zunächst mit einem gewünschten Drehwinkelversatz zwischenzeitlich gestapelt werden, bleibt bis zur Erreichung dieser Zwischenstapelhöhe ausreichend Zeit, um die erforderlichen Maßnahmen auszuführen, die für eine Neuorientierung der bislang gestapelten Produkte erforderlich ist.

Erfindungsgemäß ist eine Zwischenstapelaufnahme vorgesehen, die zur Erzeugung des Drehwinkelversatzes verwendet wird. In Verbindung mit einer Stapelaufnahme ist es dann möglich, die Übergabe des ersten und des zweiten Produkts in gestapelter Form von der Zwischenstapelaufnahme zur Stapelaufnahme vorzunehmen. Beispielsweise kann die Zwischenstapelaufnahme eine steuerbare Öffnung aufweisen, die zum Zeitpunkt der Übergabe entsprechend geöffnet wird, so dass durch geeignete Maßnahmen bei entsprechender Positionierung der Stapelaufnahme und der Zwischenstapelaufnahme die gestapelten Produkte überführt werden können.

Im Weiteren wird die vorliegende Erfindung mit Bezug zu den begleitenden Zeichnungen detaillierter beschrieben, in denen:
Fig. 1a schematisch eine Thermoformanlage zeigt, in der eine erfindungsgemäße Stapelstation vorgesehen ist,
Fig. 1b und 1c schematisch eine Draufsicht auf zu stapelnde Produkte zeigen, die erfindungsgemäß einen geeigneten Drehwinkelversatz, d.h. eine Drehung um eine Stapelrichtung, erfahren, um eine exakte Stapelung zu ermöglichen, auch wenn die Produkte ansonsten identisch sind und insbesondere identisch positionierte Abstandsnoppen haben,
Fig. 2a eine schematische perspektivische Ansicht ist, die eine Stapelstation gemäß der vorliegenden Erfindung zeigt,
Fig. 2b eine Seitenansicht der Stapelstation aus Fig. 2a ist,
Fig. 2c und 2d perspektivische Ansichten eines Teils der Stapelstation sind, wobei eine Zwischenstapelaufnahme einen drehbaren Bereich umfasst,
Fig. 2e und 2f entsprechende schematische Ansichten von unten sind, wobei die Zwischenstapelaufnahme mit einer Öffnung gezeigt ist, die zur Stapelung der Produkte geschlossen ist (Fig. 2e) und die Öffnung in einem Zustand gezeigt ist, in welchem eine Übergabe an eine weitere Stapelaufnahme erfolgen kann (Fig. 2f),
Fig. 3 schematisch eine Draufsicht auf eine Ausdrückvorrichtung zeigt, die individuell drehbare Ausdrückarme aufweist, um zumindest teilweise den Drehwinkelversatz zu erzeugen,
Fig. 4 schematisch eine Ausdrückvorrichtung zeigt, die mehrere Ausdrückarme aufweist, die kollektiv drehbar sind, um den Drehwinkelversatz zu erzeugen,
Fig. 5a und 5b schematisch eine Seitenansicht und eine Draufsicht einer Positioniereinrichtung zeigen, die geeignet ausgebildet ist, Produkte während der Stapelung zu führen und gleichzeitig einen Drehwinkelversatz zu erzeugen und
Fig. 5c schematisch eine Seitenansicht einer Positioniereinrichtung zeigt, die in Verbindung mit einem Ausdrückarm einen gewünschten Winkelversatz erzeugt, wobei gleichzeitig eine Temperierung durch Anblasen der Produkte erfolgt.

Es werden nun weitere Ausführungsformen detaillierter beschrieben, wobei auf die schematischen begleitenden Zeichnungen Bezug genommen wird.

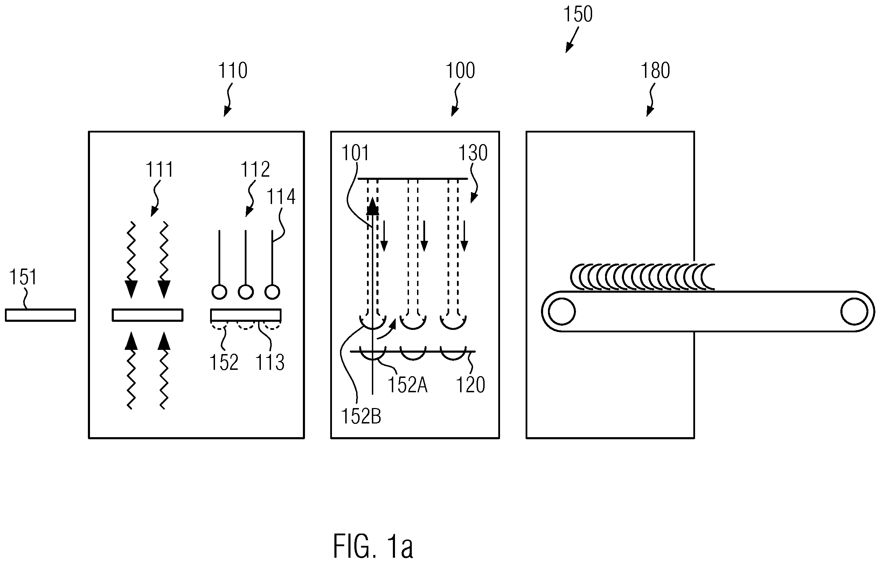

Figur 1a zeigt eine Thermoformanlage 150, die einzelne Funktionsblöcke aufweist, wobei in der dargestellten Ausführungsform ein Funktionsblock 110 gezeigt ist, in welchem Produkte 152 in Form von Formteilen erzeugt werden. Dazu empfängt der Funktionsblock 110 ein Grundmaterial 151, etwa in Form von Kunststoffplatten oder Folienmaterial, das thermoplastisch verformt werden kann. In einem Bereich 111 wird das Grundmaterial 151 in geeigneter Weise erwärmt, wozu beliebige, im Stand der Technik bekannte Mittel eingesetzt werden. Nach Erreichen einer gewünschten Temperatur, die zur thermoplastischen Verformung des Grundmaterials 151 geeignet ist, wird in einem weiteren Bereich 112 das Grundmaterial 151 verformt, wobei geeignete Formwerkzeuge 114 eingesetzt werden, so dass die Produkte 152 erzeugt werden. Wie bereits zuvor erläutert, können die Produkte 152 eine beliebige gewünschte Form haben, wie sie für die spezielle Anwendung erforderlich ist. Insbesondere sind die Produkte 152 im Anschluss in geeigneter Weise zu stapeln, so dass in der Regel entsprechende Abstandsnoppen bei der Ausformung der Produkte 152 gebildet werden, die gemäß dem Prinzip in der vorliegenden Erfindung jedoch für alle Produkte in gleicher Weise erzeugt werden können, da eine Verdrehung der aufeinanderfolgenden Produkte vor ihrer Stapelung erfolgt, so dass trotz an sich identischer Position der Abstandsnoppen eine zuverlässige Stapelung erfolgen kann.

In der Regel erfolgt die Formung sowie die Stanzung der geformten Produkte 152 derart, daß noch kleine Materialstege vorhanden bleiben, so dass die Produkte 152 mit dem nicht verformten Teil des Grundmaterials 151 und untereinander durch leicht brechbare Verbindungen mechanisch gekoppelt bleiben. Ein derartiger Materialabschnitt bzw. eine Platte, in der die Produkte 152 weiterhin miteinander in Verbindung stehen, wird auch als Index 113 bezeichnet. Nach der Bearbeitung in dem Funktionsblock 110 werden die Produkte 152, etwa in Form der Indizes 113, weiter transportiert zu einem Funktionsblock 100, der im Weiteren auch als Stapelstation bezeichnet wird.

In der Stapelstation 100 findet erfindungsgemäß zumindest ein Teil der Stapelung der Produkte 152 statt, die zunächst so erfolgt, daß die Produkte 152 aus den Indizes 113 herausgedrückt werden, wobei dies in einer beliebigen geeigneten Richtung erfolgt, etwa nach oben oder nach unten. Ferner wird in der Stapelstation 100 ein Drehwinkelversatz zwischen zwei aufeinanderzustapelnden Produkten erzeugt, so dass auch bei absolut identischer Ausbildung der Produkte ein genauer Abstand durch die Abstandsnoppen eingehalten werden kann. Das heißt, in der Stapelstation 100 der vorliegenden Erfindung werden zumindest temporär Produkte 152 auf einer geeigneten Ablage 120 abgelegt und nachfolgende Produkte werden durch einen relativen Drehwinkelversatz zwischen den bereits abgelegten Produkten und den noch zu stapelnden Produkten bis zu einer gewünschten Höhe bzw. bis zu einer bestimmten Anzahl an gestapelten Produkten gestapelt.

In der Stapelstation 100 werden also ein erstes Produkt 152A, das bereits auf der Ablage 120 angeordnet ist, und ein zweites Produkt 152B, beispielsweise durch eine Ausdrückvorrichtung 130 oder durch andere Mittel, wie nachfolgend detaillierter beschrieben ist, so zueinander ausgerichtet, daß sie in einer Stapelrichtung 101 fluchten, jedoch vor dem endgültigen Kontakt des ersten Produkts 152A und des zweiten Produkts 152B um die durch die Stapelrichtung 101 definierte Drehachse gedreht werden, so dass der gewünschte Winkelversatz zwischen dem ersten Produkt 152A und dem zweiten Produkt 152B erzeugt wird. Es sollte beachtet werden, dass der Einfachheit halber die Stapelung zweier aufeinanderfolgender Produkte in einem einzelnen Stapel beschrieben ist, wobei der gleiche Vorgang auch auf weiteren Stapeln erfolgen kann, wobei die Geometrie sowie die Anzahl der einzelnen Stapel, beispielsweise durch die Größe des Index 113 und der darin erzeugten Produkte 152 festgelegt sind. Es sollte ferner beachtet werden, daß die Ausdrückvorrichtung 130 gleichzeitig auch für die vorläufige Stapelung des ersten und des zweiten Produkts 152A, 152B sorgen kann, in anderen Fällen, wie nachfolgend beschrieben ist, andere Mittel zur eigentlichen Stapelung und zur Erzeugung des Drehwinkelversatzes vorgesehen sind, und die Ausdrückvorrichtung 130 lediglich das Herausbrechen der Produkte aus dem entsprechenden Index 113 vornimmt.

In vorteilhaften Ausführungsformen ist die Stapelstation 100 ferner ausgebildet, die in der Ablage 120 zwischenzeitlich gestapelten Produkte in eine geeignetere Form zur Entnahme umzuschichten, wie dies auch nachfolgend detaillierter beschrieben ist.

Ferner umfasst die Anlage 150 eine Entnahmevorrichtung 180, die ausgebildet ist, im Zusammenwirken mit der Stapelstation 100 die Produkte in geeigneter Weise aufzunehmen oder diese in geeigneter Weise zu stapeln und die gestapelten Produkte dann in einer geeigneten Form, beispielsweise in verpackter Form, u. dgl., auszugeben. In anderen Ausführungsformen können nach der Entnahmevorrichtung 180 ein oder mehrere weitere Funktionsblöcke folgen, um die Produkte schließlich in der gewünschten Form und Anordnung auszugeben.

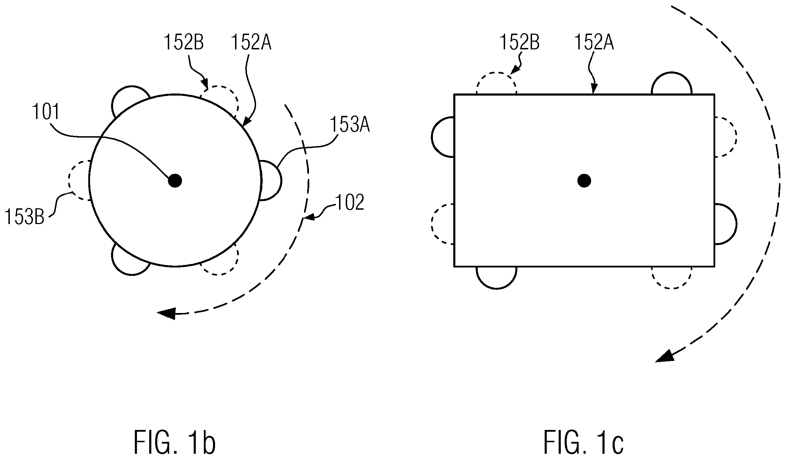

Figur 1b zeigt schematisch eine Draufsicht auf ein gestapeltes erstes Produkt 152A und ein zweites Produkt 152B. Das heißt, die beiden Produkte sind entlang der Stapelrichtung 101 ausgerichtet und miteinander in Kontakt, wobei zwischen dem ersten Produkt 152A und dem zweiten Produkt 152B ein gewünschter Drehwinkelversatz 102 vorhanden ist, der dazu führt, daß eine präzise Stapelung entlang der Richtung 101 gewährleistet ist. In der Zeichnung sind schematisch entsprechende Abstandsnoppen 153A des ersten Produkts gezeigt, die hier lediglich schematisch und übertrieben als entsprechende Vorsprünge dargestellt sind, die jedoch eine beliebige geeignete Form haben können, um einen geeigneten Stapelabstand einzustellen. Durch den Drehwinkelversatz 102 sind die entsprechenden Abstandsnoppen 153B, die als gestrichelte Linien gezeigt sind, und die ansonsten identische Form und Position, wie die Abstandsnoppen 153A haben, entsprechend verdreht, so dass jeweils zwei aufeinanderfolgende Produkte in der Stapelrichtung 101 zueinander verdrehte Abstandsnoppen antreffen und damit eine präzise Stapelung ermöglichen. In der Ausführungsform der Fig. 1B könnte im Prinzip eine Vielzahl unterschiedlicher Drehwinkelversätze angewendet werden, solange die Abstandsnoppen zwei aufeinanderfolgender Produkte nicht in ihrer Position übereinstimmen. Das heißt, aufgrund der mit Ausnahme der Position der Abstandsnoppen gegebenen Rotationssymmetrie um die Achse, die durch die Stapelrichtung 101 definiert ist, könnte ein nahezu beliebiger Drehwinkelversatz 102 zur Anwendung kommen. Wie nachfolgend erläutert ist, können sich jedoch gewisse Einschränkungen auch bei Vorhandensein einer Rotationssymmetrie ergeben, die durch die Art und Weise des Erzeugens des Drehwinkelversatzes 102 gegeben sind.

Figur 1c zeigt schematisch eine Draufsicht auf Produkte, die bei Drehung um die durch die Stapelrichtung 101 definierte Achse eine reduzierte Symmetrie aufweisen. Das heißt, die rechteckige Grundform der dargestellten Produkte läßt eine 180°-Drehung zu, wobei jedoch eine vollständige Symmetrie bei dieser Drehung vermieden wird, da die entsprechenden Abstandsnoppen in ihrer Gestaltung so ausgewählt sind, daß bei der entsprechenden Verdrehung die jeweiligen Positionen der Abstandsnoppen unterschiedlich sind, so dass wiederum jeweils zwei aufeinanderfolgende Produkte nicht exakt aufeinanderliegende Abstandsnoppen aufweisen. Auch in dieser Anordnung läßt sich eine exakte Stapelung für identische Produkte erreichen, wobei jedoch ggf. der Drehwinkelversatz 102 durch die Grundform der Produkte eingeschränkt ist.

Es sollte beachtet werden, daß generell die Erzeugung eines Drehwinkelversatzes zwischen zwei aufeinanderfolgenden gestapelten Produkten nicht darauf beschränkt ist, daß die Produkte identisch in ihrer Gestaltungsform sind und insbesondere ist es auch nicht erforderlich, daß Abstandsnoppen vorgesehen sind, falls bereits die Gestalt der Produkte selbst dazu geeignet ist, durch die Einführung eines gewissen Winkelversatzes eine präzise Stapelung der Produkte zu ermöglichen. Das heißt, wenn die Form der Produkte eine gewisse Asymmetrie in Bezug auf eine Verdrehung zeigt, kann unter Umständen diese Asymmetrie ausgenutzt werden, um die Produkte in geeigneter Weise zu stapeln, ohne daß dazu speziell angeformte Abstandsnoppen erforderlich sind. Bei Produkten, die generell ohne die Anformung von Abstandsnoppen zu stapeln sind, wenn also die allgemeine Form ein Verklemmen beim Aufeinanderstapeln mehrerer Produkte verhindert, kann die Einführung eines Drehwinkelversatzes dennoch gewisse Vorteile haben, beispielsweise im Hinblick auf die Inspektion der Produkte, die Temperierung, u. dgl., die auch nachfolgend detaillierter erläutert ist.

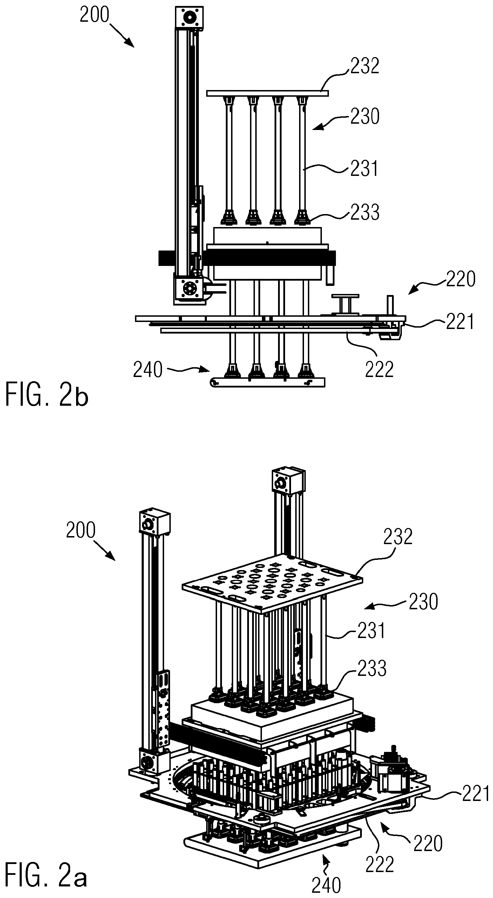

Mit Bezug zu Fig. 2a bis 2f werden nun erfindungsgemäße Ausführungsformen beschrieben, die in Verbindung mit den beiden zuvor beschriebenen Varianten einsetzbar sind und in denen ein Winkelversatz um die Stapelrichtung der jeweiligen Produkte dadurch erreicht wird, dass ein Teil der Stapelstation drehbar ist, so dass sich zumindest in einer ersten Position eine gewisse Winkelausrichtung eines ersten Produkts ergibt und in einer zweiten Position ein Winkelversatz in Bezug auf die Stapelrichtung erhalten wird, so dass zumindest zwei aufeinanderfolgende zu stapelnde Produkte zueinander verdreht sind.

Figur 2a zeigt eine perspektivische Ansicht einer Stapelstation 200, die prinzipiell so eingerichtet ist, wie dies auch in Verbindung mit den Fig. 1 in Bezug auf die Stapelstation 100 beschrieben ist. Das heißt, die Stapelstation 200 ist so ausgebildet, daß ein gewünschter Winkelversatz um eine Stapelrichtung herum zwischen zwei aufeinanderzustapelnden Produkten erzeugt werden kann. In den Ausführungsvarianten, die in Fig. 2a bis 2f gezeigt sind, wird dieser Winkelversatz erreicht, indem eine Zwischenstapelaufnahme 220 vorgesehen ist, die einen verdrehbaren Bereich aufweist, etwa in Form eines Drehtellers, auf welchem die Produkte zwischenzeitlich zu stapeln sind, so dass in einer ersten Position ein erster Drehwinkel, der auch einer unverdrehten Position entsprechen kann, gemeinsam für alle gleichzeitig zu stapelnden Produkte erhalten wird, und in einer zweiten Position des drehbaren Bereichs der Zwischenstapelaufnahme 220 ein Winkelversatz für ein nächstes zu stapelndes Produkt oder ein weiteres Produkt erreicht wird, das an einer beliebigen Position über dem zuvor gestapelten Produkt anzuordnen ist. Es sollte beachtet werden, daß es generell zweckmäßig ist, zwei unmittelbar aufeinanderfolgende Produkte mit Winkelversatz zu stapeln, daß aber auch in der vorliegenden Erfindung Situationen berücksichtigt sind, in denen beispielsweise zwei oder mehr Produkte ohne Winkelversatz gestapelt werden, um anschließend ein oder mehrere weitere Produkte unter Anwendung eines Winkelversatzes anzuordnen. Ein entsprechendes System der Stapelung kann beispielsweise vorteilhaft sein, wenn prinzipiell eine Stapelung mehrerer Produkte ohne Verklemmung möglich ist, so dass beispielsweise keine Abstandsnoppen an den Produkten angeformt sind, jedoch eine Verdrehung der Produkte aufgrund einer nicht vollständig rotationssymmetrischen Form eine Unterscheidung entsprechender Abschnitte im Stapel ermöglicht.

In weiteren Ausführungsvarianten kann die Zwischenstapelaufnahme 220 zwei oder mehr Bereiche aufweisen, die unterschiedlichen Positionen in der gleichen Ebene bewegbar sind, um beispielsweise die Möglichkeit zu schaffen, an einer Position weiterhin Produkte mit Winkelversatz zu stapeln, während an einer anderen Position zuvor gestapelte Produkte an einen weiteren Funktionsblock übergeben werden.

Die Stapelstation 200 umfasst ferner eine oder mehrere Stapelaufnahmen 240, die so ausgebildet sind, dass sie die temporär in dem einen oder den mehreren verdrehbaren Bereichen der Zwischenstapelaufnahme 220 enthaltenen Produkte aufnehmen können, um etwa weitere Verarbeitungsschritte an den gestapelten Produkten auszuführen und/oder um diese an eine Entnahmevorrichtung zu übergeben und/oder die Stapelrichtung neu zu orientieren, beispielsweise zu kippen, und dergleichen.

Die Stapelstation 200 umfasst ferner eine Ausdrückvorrichtung 230, die typischerweise mehrere Ausdrückarme 231 umfasst, so dass mehrere Produkte, die gleichzeitig in einer vorgelagerten Form- und Stanzstation erzeugt werden, ausgedrückt und an die Zwischenstapelstation 220 übergeben werden können. Die Ausdrückarme 231 sind dabei so ausgebildet, daß sie in einer Richtung verfahrbar sind, in Fig. 2a ist dies die vertikale Richtung, um die in einem Index angelieferten Produkte in Richtung zu der Zwischenstapelaufnahme 220 zu transportieren. In der dargestellten Ausführungsform erfolgt das Ausdrücken der Produkte und die Beschickung der Zwischenstapelaufnahme 220 von oben nach unten, wobei die anderen Ausführungsformen auch die umgekehrte Anordnung anwendbar ist. In der dargestellten Ausführungsform sind die Ausdrückarme 231 kollektiv verschiebbar auf der Grundlage einer Halterung 232, die in der dargestellten Ausführungsform in der vertikalen Richtung bewegbar ist. Das heißt, durch ein Verfahren der Halterung 232 auf der Grundlage geeigneter Antriebsmittel (nicht gezeigt) kann eine Auf-Ab-Bewegung der Ausdrückarme 231 zum Ausdrücken der Produkte und zum Transport der Produkte zur Zwischenstapelaufnahme 220 verfahren werden.

Typischerweise sind die Ausdrückarme 231 so ausgebildet, daß sie in geeigneter Weise in die Produkte eingreifen und diese aus dem jeweiligen Index herauslösen können, wobei ggf. auch eine temporäre Fixierung der Produkte an den Ausdrückarmen 231 vorgesehen ist. Beispielsweise kann ein Endbereich 233 der Ausdrückarme 231 so gestaltet sein, daß ein Kontakt mit dem jeweiligen Produkt möglich ist, und beispielsweise durch geeignete Mittel, etwa Vakuum-Ansaugung, u. dgl., eine Fixierung der Produkte an den Endbereichen 233 möglich ist. Wenn eine entsprechende temporäre Befestigung der Produkte an den Endbereichen 233 nicht erforderlich ist, etwa wenn das Ausdrücken nach oben erfolgt und die Zwischenstapelaufnahme 220 von unten her beladen wird, kann ggf. die Schwerkraft ausreichend sein, um die nötige mechanische Fixierung der Produkte an den Endbereichen 233 während des Ausdrückvorgangs und des Transports zu der Zwischenstapelaufnahme 220 zu bewerkstelligen.

Figur 2b zeigt eine Seitenansicht der Stapelstation 200, wobei ein Antriebsmechanismus 221 dargestellt ist, der einen Drehteller, d.h. einen verdrehbaren Bereich 222 steuerbar um eine Drehachse drehen kann, die senkrecht zu der Stapelrichtung für zu stapelnde Produkte ist. Das heißt, der Antriebsmechanismus 221 dient dazu, den Drehteller 222, beispielsweise in Fig. 2b um die vertikale Achse, zu drehen, so dass in der Regel eine Schwenkung der einzelnen Stapelpositionen um die jeweilige Drehachse erfolgt. Damit sind in einer ersten Position die Stapelpositionen so ausgerichtet, dass durch Absenkung der Ausdrückarme 231 eine entsprechende Anzahl erster Produkte in den jeweiligen Stapelpositionen abgelegt wird und nachfolgend nach Drehung des Drehtellers 222 die Stapelpositionen so ausgerichtet sind, daß nächste Produkte gestapelt werden können, die also in der jeweiligen Stapelrichtung der entsprechenden Stapelposition gestapelt werden. Dabei ist zu berücksichtigen, dass also die Stapelrichtung bei jeder Drehung des Drehtellers 222 parallel verschoben werden kann, jedoch zwei Produkte, die in einem Stapelort gestapelt werden, in Bezug auf diese Stapelrichtung einen Drehwinkelversatz aufweisen, wie dies auch zuvor beschrieben ist. Das heißt, ein Stapelort der Zwischenstapelaufnahme 220 kann beispielsweise Produkte aus jeweils zwei oder mehr unterschiedlichen Ausdrückarmen 231 empfangen, die jedoch in der Regel identische Produkte sind, und zur Zwischenstapelstation 220 transportieren, so dass dennoch für jede Stapelposition in der Zwischenstapelaufnahme 220 in Bezug auf die jeweilige Stapelrichtung der gewünschte Winkelversatz erhalten wird.

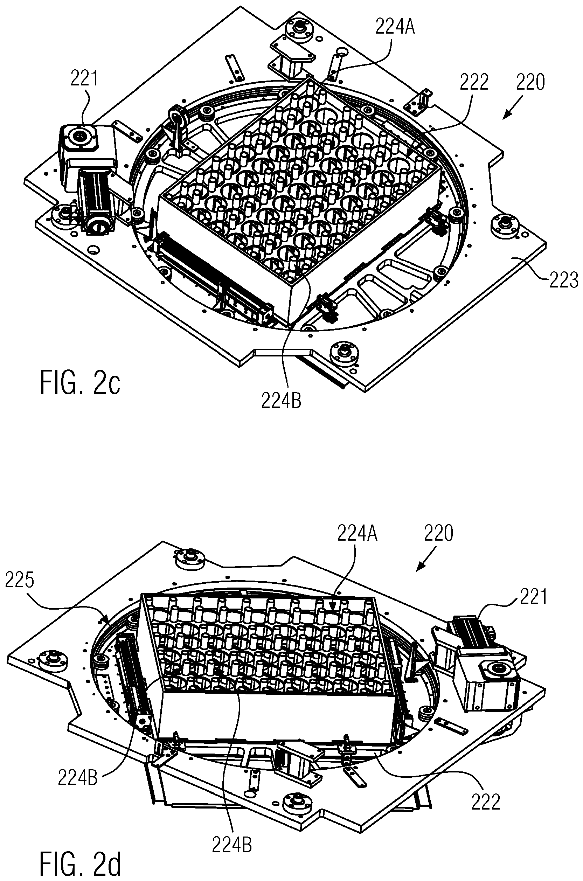

Figur 2c zeigt eine perspektivische Ansicht der Zwischenstapelaufnahme 220, in der der drehbare Bereich bzw. der Drehteller 222 so ausgebildet ist, daß er eine Vielzahl an Stapelpositionen bzw. Stapelorten 224A, 224B, ... aufweist. In der dargestellten Variante ergibt sich ein im Wesentlichen rechteckiges Feld an Stapelpositionen, die typischerweise entsprechenden Ausdrückarmen 231 (siehe Fig. 2a) zugeordnet sind, so dass in der Regel jede Stapelposition 224A, 224B bei jedem Ausdrückvorgang ein entsprechendes Produkt aufnimmt. In der gezeigten Ausführungsform erfolgt beispielsweise in Verbindung mit jedem Ausdrückvorgang, bis auf einen ersten und einen letzten Ausdrückvorgang, eine Drehung des Bereichs 222 derart, daß auch in der gedrehten Position des Bereichs 222 eine identische Anordnung der Stapelpositionen als Gesamtheit erreicht wird, d.h., dass wieder eine rechteckige Anordnung mit gleicher Orientierung erhalten wird, wodurch wiederum jeder Ausdrückarm einer Stapelposition zugeordnet ist. Beispielsweise wird bei einer Drehung um 180° in der dargestellten Ausführungsform wieder eine äquivalente Anordnung aus Stapelpositionen erhalten, wobei jedoch einzelnen Stapelorte ihre absolute Position so geändert haben, daß sie nunmehr an einer Position liegen, die in Bezug auf die jeweilige Stapelrichtung einen Winkelversatz von 180° aufweist. Beispielsweise wechseln die Stapelorte 224A und 224B ihre Position bei einer Drehung um 180°, so dass eben auch ein Produkt, daß dann in dem Stapelort 224A in der neuen Lage aufgenommen wird, einen entsprechenden Winkelversatz entlang der zugehörigen Stapelrichtung von 180° aufweist. Wie bereits zuvor in Verbindung mit Fig. 1b und 1c erläutert ist, kann damit eine geeignete Verdrehung der zu stapelnden Produkte erreicht werden, so dass ein Verklemmen der ineinander gestapelten Produkte zuverlässig verhindert wird. Beispielsweise sind entsprechende Abstandsnoppen so ausgebildet, daß eine Verdrehung ihrer Position um 180° zur präzisen Einstellung eines Stapelungsabstands geeignet ist. In anderen Situationen, kann die Form der Produkte selbst geeignet sein, um bei der Drehung des Drehbereichs 222, einen Winkelversatz zu erhalten, der für die Stapelung derartiger Produkte geeignet ist.

Figur 2d zeigt schematisch die Zwischenstapelaufnahme 220, wenn sie durch Ansteuerung der Antriebseinheit 221 um eine Achse gedreht wird, die in der gezeigten Anordnung dem Mittelpunkt des Kreises 225 entspricht, auf dessen Umfang entsprechende Antriebsrollen abrollen, um die Drehung des Drehtellers 222 zu verwirklichen. Wie man erkennen kann, wird somit der Stapelort 224A in Richtung der ursprünglichen Position des Stapelortes 224B, und umgekehrt, gedreht. Gleiches gilt für alle anderen Stapelorte auf dem Drehteller 222.

Es sollte beachtet werden, daß die gezeigte rechteckige Form für die Anordnung der diversen Stapelorte 224A, 224B, ... eine von vielen möglichen geometrischen Formen sein kann, die in der Regel so gewählt ist, daß sie auf die anderen Komponenten einer Thermoformanlage abgestimmt ist. Es können aber auch quadratische Grundformen mit einer vierfachen Rotationssymmetrie, sechseckige Grundformen, u. dgl., verwendet werden. Dadurch lassen sich andere Winkelversätze einstellen, beispielsweise 90°, 60°, u. dgl.. Auch bei der in den Figuren dargestellten rechteckigen Anordnung der Stapelorte 224A, 224B, ... lassen sich andere Winkelversätze erreichen, indem beispielsweise eine quadratische Teilmenge der Stapelorte 224A, 224B, verwendet wird, und dabei diese Teilmenge symmetrisch zu der Drehachse des Drehbereichs 222 liegt. In diesem Fall ist auch die Anordnung der Ausdrückarme entsprechend anzupassen, so dass eben nur die Stapelorte der entsprechenden Teilmenge mit Produkten gefüllt werden.

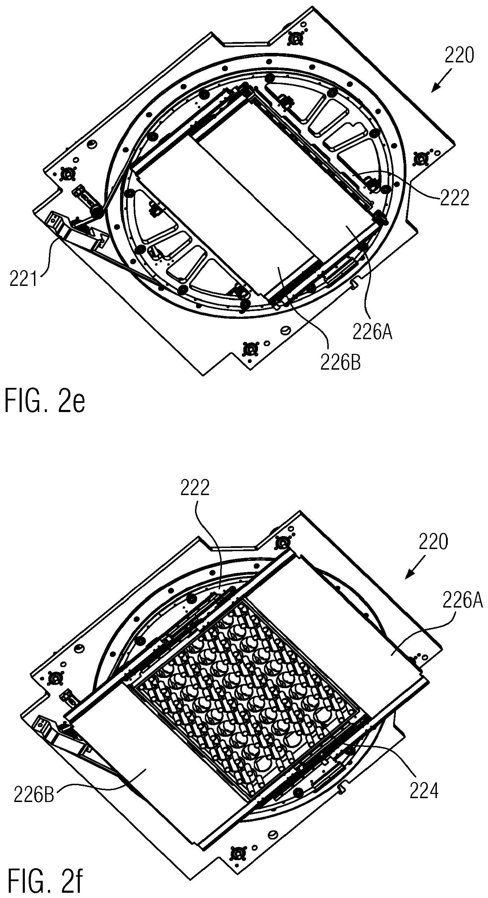

Figuren 2e und 2f zeigen perspektivische Ansichten der Unterseite der Zwischenstapelaufnahme 220 in zwei unterschiedlichen Zuständen.

Figur 2e zeigt die Zwischenstapelaufnahme 220 mit einer Verschlusseinrichtung, die schematisch durch zwei Verschlussteile 226A, 226B gezeigt ist, wobei ein entsprechender Antriebsmechanismus zum Verschieben der jeweiligen Verschlussteile 226A, 226B nicht dargestellt ist.

Figur 2f zeigt die Zwischenstapelaufnahme 220 in einem Zustand, in welchem die beiden Verschlussteile 226A, 226B geöffnet sind, so dass die Stapelorte 224 freigelegt werden, so dass eine Übergabe an die darunter angeordnete Stapelaufnahme 240 (siehe Fig. 2a und 2b) erfolgen kann. Die Stellung des Drehbereichs 222 ist dabei so gewählt, daß sie mit der Orientierung der darunterliegenden Stapelaufnahme 240 übereinstimmt, so dass die in der Zwischenstapelaufnahme 220 gebildeten Stapel in geeigneter Weise überführt werden können.

Die in den Fig. 2a bis 2f dargestellte Stapelstation 200 wird wie folgt betrieben. Nach dem Erzeugen von Produkten in einem Form- und Stanzbereich, etwa in dem Funktionsblock 110 (siehe Fig. 1a), was in einer entsprechend durch die Anlage vorgegebenen Anzahl an Arbeitstakten bewerkstelligt werden kann, werden die Produkte in Form eines Index, d.h. in Form einer Materialplatte oder eines Materialbereichs, in welchem die geformten und gestanzten Produkte durch kleine Materialstege noch miteinander verbunden sind, der Stapelstation 200 zugeführt. Die Produkte, die gemäß der zuvor angegebenen Erläuterung ersten Produkten entsprechen, werden unter der Ausdrückvorrichtung 230 positioniert, so dass in der Regel jedem Ausdrückarm 231 ein entsprechendes Produkt zugeordnet ist. Selbstverständlich können auch kleinere Indizes verwendet werden, so dass beispielsweise Ausdrückarme am Rand ggf. kein Produkt ausdrücken. In einem nächsten Arbeitstakt werden die Ausdrückarme 231 verfahren, beispielsweise durch Absenken der Halterung 232 (Fig. 2a, 2b), so dass die Produkte aus dem Grundmaterial herausgebrochen werden und in Richtung zu der Zwischenstapeleinheit 220 transportiert werden. Wie zuvor bereits erläutert ist, können dabei die Produkte temporär an den Ausdrückarmen 231 befestigt werden, oder aber die Schwerkraft ist ausreichend, um die Produkte zu halten, wenn beispielsweise nach oben ausgedrückt wird. Für den aktuellen Arbeitstakt sei angenommen, daß die Position des Drehbereichs 222 bereits geeignet eingestellt ist, so dass eine korrekte Aufnahme der ersten Produkte erfolgen kann. Nach erfolgter Ablage der ersten Produkte in der Zwischenstapelaufnahme 220 werden die Ausdrückarme 231, möglicherweise in Verbindung mit einer Lösung des entsprechenden Fixiermechanismus, in ihre Ausgangsposition zurückgefahren, um in einem nächsten Arbeitstakt auf das Eintreffen weiterer Produkte zu warten, wenn ein Winkelversatz für jeweils unmittelbar aufeinanderfolgende Produkte erforderlich ist. In einem beliebigen Zeitpunkt nach der Ablage der zuvor ausgedrückten Produkte und nachdem die Ausdrückarme 231 aus dem Bereich der Stapelorte 224 entfernt sind, wird eine Drehung des Bereichs 222 durch den Antriebsmechanismus 221 auf der Grundlage eines Steuersignals einer nicht gezeigten Steuereinheit ausgeführt. Im Hinblick auf die Größe der Verdrehung sei auf die zuvor dargelegten Ausführungen verwiesen.

Nach dem Eintreffen der weiteren Produkte, beispielsweise der zweiten Produkte, werden die Ausdrückarme 231 wieder verfahren, beispielsweise durch Verschieben der Halterung 232, und die zweiten Produkte werden auf entsprechenden ersten Produkten gestapelt, wobei nunmehr der durch die vorhergehende Drehung hervorgerufene Drehwinkelversatz in der Stapelrichtung an jedem Drehort erzeugt wird. Nach erfolgter Ablage der zweiten Produkte fahren die Ausdrückarme 231 wieder in ihre Ausgangsposition zurück und, falls ein Drehwinkelversatz für die unmittelbar folgenden Produkte erforderlich ist, wird der Drehbereich 222 wieder gedreht, beispielsweise in der gleichen Drehrichtung, oder auch in der entgegengesetzten Richtung, so dass die Stapelpositionen für die Aufnahme weiterer Produkte, die einen Winkelversatz zu den zuvor gestapelten Produkten benötigen, vorbereitet ist. Dieser Vorgang wird wiederholt, bis eine voreingestellte Anzahl an gestaffelten Produkten in jedem Stapelort 224 erreicht ist. Es wird dann die Stapelaufnahme 240 (Fig. 2a, 2b) unter oder über die Zwischenstapelposition 220 gefahren, abhängig davon, ob nach unten oder nach oben ausgedrückt wird, oder aber die Stapelaufnahme 240 ist stationär und ist stets korrekt positioniert, um die Stapel aus der Zwischenstapelaufnahme 220 aufzunehmen. Für die Übergabe der Produkte werden die Verschlussteile 226A, 226B geöffnet durch Ansteuerung mittels einer nicht gezeigten Steuereinheit und entsprechende Antriebsmittel, so dass die Stapelpositionen 224 freigelegt werden, wie in Fig. 2f gezeigt ist. Durch geeignete Maßnahmen werden die mit Winkelversatz gestapelten Produkte an die Stapelaufnahme 240 übergeben, etwa ebenfalls durch Einwirkung der Ausdrückvorrichtung 230, die beispielsweise soweit nach unten bzw. oben verfahren wird, daß ein Kontakt mit den jeweiligen Stapeln entsteht und bei weiterer Verschiebung der Ausdrückarme die entsprechenden Stapel in die Stapelaufnahme 240 überführt werden.

Es sollte beachtet werden, daß für die Übergabe von Produkten von den Ausdrückarmen zu der Zwischenstapelaufnahme 220 und/oder für die Übergabe der gestapelten Produkte von der Zwischenstapelaufnahme 220 zu der Stapelaufnahme 240 beliebige geeignete Mittel eingesetzt werden können, um beispielsweise ein Abfallen der Produkte zu verhindern oder auf eine gewünschte Geschwindigkeit zu reduzieren, u. dgl.. Zu diesem Zweck können Bürsten oder eine Art von Kamm verwendet werden, um die Produkte in gesteuerter Weise von einem Ort zu einem anderen zu übergeben. Ferner ist zu beachten, daß die Stapelaufnahme 240 eine beliebige Anordnung repräsentiert, die zur Übernahme der Produkte aus der Zwischenstapelaufnahme 220 geeignet ist. Die Stapelaufnahme 240 kann beispielsweise ein absenkbares Förderband, einen Hubtisch, Förderschächte, Schieber, oder beliebige Kombinationen davon umfassen oder repräsentieren, so dass die Produkte aus der Zwischenstapelaufnahme 220 in geeigneter Weise übernommen und ggf. weitergestapelt und/oder weiterverarbeitet werden können.

Ferner ist zu beachten, daß das Freilegen der Stapelorte 224 durch den Verschluss 226A, 226B nur eine beispielhafte Variante ist, und daß andere Mechanismen eingesetzt werden können, um eine Übergabe zu der Stapelaufnahme 240 durchzuführen. Beispielsweise ist ggf. keinerlei Mechanismus erforderlich, sofern die Stapel in der Zwischenstapelaufnahme 220 können durch entsprechende Rasteinheiten, etwa Noppen, u. dgl. gehalten werden und die Übergabe beispielsweise durch Ausdrücken mittels der Ausdrückvorrichtung 230 erfolgen. Nach der Übergabe der Produkte an die Stapelaufnahme 240 ist eine Drehung der Zwischenstapelaufnahme 220 in der Regel nicht erforderlich, so dass die Zwischenstapelaufnahme 220 unmittelbar nach der Übergabe der Produkte und ggf. nach Rückzug der Ausdrückarme 231 für die Aufnahme weiterer Produkte verfügbar ist. Gegebenenfalls ist eine Unterbrechung der Herstellung der geformten und gestanzten Produkte in dem vorgeordneten Funktionsblock nicht erforderlich, wenn beispielsweise das Ausdrücken der "letzten" Produkte in Verbindung mit der Übergabe von der Zwischenstapelaufnahme 220 zu der Stapelaufnahme 240 erfolgt. Das heißt, in der Regel ist die Taktzeit für die einzelnen Arbeitsschritte so gewählt, daß eine kurzzeitige Verlängerung des Ausdrück-Taktes mit eingeschlossen ist, so dass ein verlängerter Ausdrückvorgang, der nunmehr auch die Übergabe von der Zwischenstapelaufnahme 220 zu der Stapelaufnahme 240 beinhaltet, zu keiner Verzögerung führt. In anderen Ausführungsformen können bei Bedarf ein oder mehrere Takte bei der Formung und Stanzung von Produkten ausgelassen werden, wenn entsprechende Zeiten für die Übergabe der gestapelten Produkte erforderlich ist. Auch eine entsprechende zeitliche Anpassung eines einzelnen Taktes, in welchem die Übergabe von der Zwischenstapelaufnahme 220 zu der Stapelaufnahme 240 erfolgt, kann durch geeignete Steuerungsmaßnahmen implementiert werden, falls dies erforderlich ist. In vorteilhaften Ausführungsformen werden die Arbeitstakte, die durch die temporäre Stapelung von Produkten in der Zwischenstapelaufnahme 220 für die Weitergabe von gestapelten Produkten anfallen, dazu genutzt, daß beispielsweise die Stapelaufnahme 240, wenn sie in Form eines Stapelkorbes vorgesehen ist, geleert wird, was beispielsweise auch das Kippen der darin angeordneten Stapel beinhalten kann, so dass die weitere Verarbeitung in einer zu der ursprünglichen Stapelrichtung gekippten Orientierung möglich ist. Beispielsweise wird die Stapelaufnahme 240 vorzugsweise um 90° gekippt und durch Schieber werden die Produkte Reihe für Reihe auf ein Förderband geschoben, das beispielsweise höhenverstellbar ist, so dass horizontale Stapel mit beliebiger Länge erzeugt werden können. Die entsprechenden Stapel können dann weiter verarbeitet, etwa verpackt werden u. dgl., das heißt, durch die Zwischenstapelung in der Zwischenstapelaufnahme 220 wird nicht nur ein gewünschter Drehwinkelversatz erzeugt, sondern es werden "zusätzliche" Anlagentakte bereitgestellt, um beispielsweise die Stapelaufnahme 240 zu entleeren und/oder zu kippen u. dgl., ohne daß diese Auswirkungen auf die vorgeordneten Funktionsblöcke der Thermoformanlage hat.

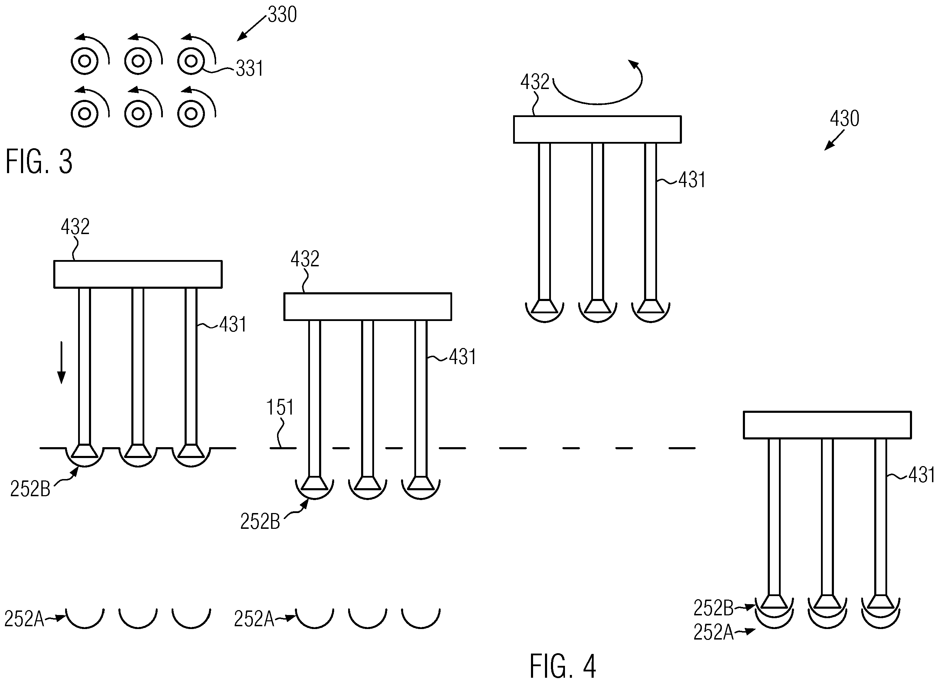

Figur 3 zeigt Ausführungsformen, in denen Ausdrückarme individuell verdrehbar sind, so dass für eine ansonsten stationäre Anordnung dennoch ein gewünschter Winkelversatz für die auszudrückenden Produkte erzeugt werden kann. Wie gezeigt, ist in einer Stapelstation gemäß der vorliegenden Erfindung eine Ausdrückvorrichtung 330 vorgesehen, die in der Regel mehrere Ausdrückarme 331 aufweist, die individuell um ihre Längsachse drehbar sind, so dass ein an jedem Ausdrückarm 331 anhaftendes Produkt um die Längsachse des jeweiligen Ausdrückarms 331 drehbar ist und somit auch um eine entsprechende Stapelrichtung drehbar ist. Die Drehung der Ausdrückarme 331 oder zumindest eines Teils davon, etwa eines unteren Bereichs, wie beispielsweise in Fig. 2a in Form des Bereichs 232 gezeigt ist, kann durch beliebige geeignete Antriebsmittel bewerkstelligt werden. Beispielsweise kann eine entsprechende pneumatische, elektrische, hydraulische Antriebseinheit vorgesehen werden, die eine gesteuerte Drehung zumindest eines Teils der Ausdrückarme 331 ermöglicht. Beispielsweise kann ein Schrittmotor oder eine pneumatische Antriebseinheit vorgesehen werden, um einen definierten Drehwinkel zu erzeugen.

Figur 4 zeigt eine weitere Ausführungsform, in der Ausdrückarme einer Ausdrückvorrichtung 430 kollektiv um eine parallel zu der Stapelrichtung verlaufenden Achse gedreht werden können. Dazu weist beispielsweise die Ausdrückvorrichtung 430 eine Halterung 432 ähnlich zu der Halterung 232 der Ausdrückvorrichtung 230 (siehe Fig. 2a, 2b) auf, wovon zumindest ein Teil entsprechend drehbar ist. Das heißt, die einzelnen Ausdrückarme 431 können auf einem Drehteller angeordnet sein. Im linken Abschnitt der Fig. 4 ist beispielsweise eine Phase des Betriebs der Ausdrückvorrichtung 430 gezeigt, in der bereits erste Produkte 252A in einer Stapelaufnahme gestapelt sind, während zweite Produkte 252B, die mit Winkelversatz auf den ersten Produkten 252A zu stapeln sind, durch die Vorrichtung 430 ausgedrückt werden. In der dargestellten Ausführungsform erfolgt das Ausdrücken nach unten, während in anderen Ausführungsformen das Ausdrücken auch nach oben erfolgen kann. Die zweite Phase in Fig. 4 zeigt einen Zustand, in welchem die Produkte 252B aus einem entsprechenden Index 151 herausgebrochen sind und an den jeweiligen Ausdrückarmen 431 anhaften, beispielsweise durch Ansaugung, und dergleichen.

In einer nächsten Phase ist die Ausdrückvorrichtung 430 wieder nach oben gefahren, so dass der Rest des Grundmaterials ausgeworfen werden kann, falls eine Drehung der Ausdrückarme 431 infolge der Drehung eines Teils der Halterung 432 nicht in Anwesenheit des Grundmaterials ausführbar ist. Wenn beispielsweise das Grundmaterial in Form von nicht zusammenhängenden Indizes durch die Anlage befördert wird, ist ein problemloser Auswurf des Restmaterials möglich. In vorteilhaften Ausführungsformen wird dabei das Anheben der Ausdrückvorrichtung 430, d.h. der Halterung 432 und der Drehung eines Teils der Halterung 432 und somit der kollektiven Drehung der Ausdrückarme 431 innerhalb eines Teils eines einzelnen Arbeitstaktes bewerkstelligt, so dass keine Verzögerung bei der Formung und Stanzung der Produkte auftritt. Wenn ein Auswerfen des Restmaterials nach dem Ausdrücken der Produkte 252B nicht möglich ist, so werden nach der Drehung eines Teils der Halterung 432 die Produkte wieder durch den noch vorhandenen Index hindurchgedrückt und nach unten abgesenkt.

In der letzten Phase der Fig. 4 ist die Ausdrückvorrichtung 430 abgesenkt, so dass eine Übergabe der Produkte erfolgen kann. Somit wird eine Stapelfolge A-B erreicht, in der die jeweiligen Produkte entsprechend der Drehung der Halterung 432 oder eines Teils davon in der jeweiligen Stapelrichtung ein Drehwinkelversatz eingestellt ist. Es sollte beachtet werden, dass selbstverständlich auch mehrere unterschiedliche Drehwinkelversätze eingestellt werden können, wenn dies für die Stapelung der Produkte geeignet oder erforderlich ist. Dabei ist wiederum die allgemeine Symmetrie der Anordnung der Ausdrückarme 431 in ähnlicher Weise zu beachten, wie dies bereits zuvor in Bezug auf die Zwischenstapelaufnahme 220 und die geometrische Anordnung der Stapelorte 224 darin erläutert ist.

Die weitere Verarbeitung der gestapelten Produkte kann dann so erfolgen, wie dies beispielsweise in Verbindung mit der Stapelaufnahme 240 erläutert ist, falls keine zwischenzeitliche Stapelung erfolgen soll. Die in Verbindung mit Fig. 3 und Fig. 4 beschriebenen Ausführungsformen können auch in Kombination mit den zuvor beschriebenen Ausführungsformen eingesetzt werden, so dass beispielsweise ein Teil des Drehwinkelversatzes durch Verdrehung der Stapelorte 224 und der restliche Anteil des Drehwinkelversatzes durch kollektives Drehen der Ausdrückarme und/oder individuelles Drehen der Ausdrückarme eingestellt wird. Auch sind Ausführungsformen mit eingeschlossen, in denen ein erster Winkelversatz durch Drehung der Stapelpositionen, etwa durch den Drehbereich 222, eingestellt wird, und ein weiterer Drehwinkelversatz, beispielsweise für ein unmittelbar nächstes zu stapelndes Produkt, durch individuelle Drehung und/oder kollektive Drehung der Ausdrückarme bewerkstelligt wird.

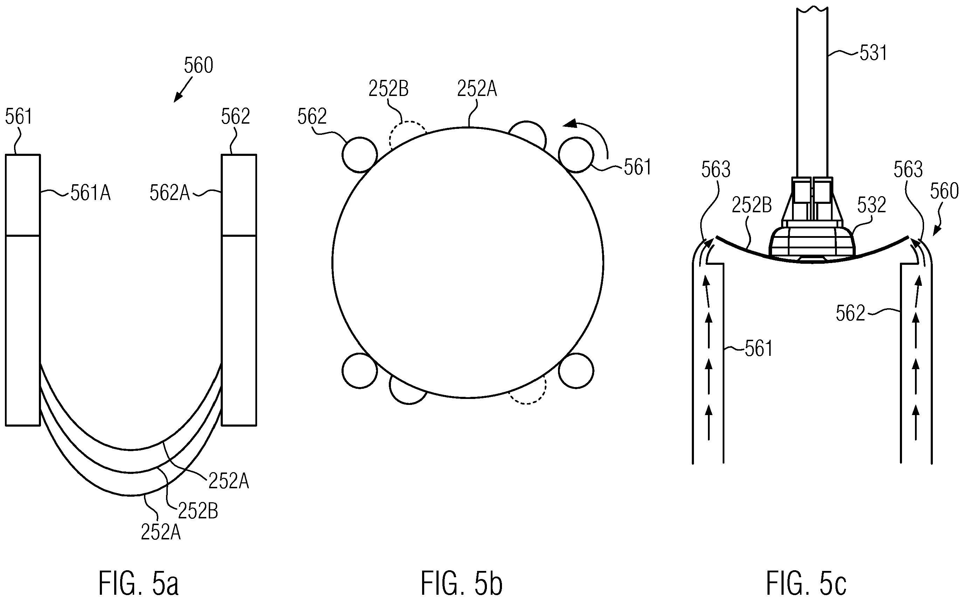

Mit Bezug zu den Fig. 5a, 5b und 5c werden weitere Ausführungsformen beschrieben, in denen in Verbindung mit dem erfindungsgemäßen Konzept eine Drehung um eine Drehachse, die identisch mit der Stapelrichtung ist, bewerkstelligt wird.

Fig. 5a zeigt eine schematische Seitenschnittansicht einer Positioniereinrichtung 560, die ausgebildet ist, gestapelte bzw. zu stapelnde Produkte in geeigneter Weise zu führen, so dass die laterale Lage der gestapelten Produkte präzise festgelegt ist. In der dargestellten Ausführungsform weist die Positioniereinrichtung 560 entsprechende Führungselemente 561, 562, ..., auf, die beispielsweise in Form von Führungsstangen, u. dgl., vorgesehen sind. Dabei ist in vorteilhaften Ausführungsformen wenigstens eines der Führungselemente 561, ..., 562 so ausgebildet, dass es ein Antriebselement aufweist, um ein mit dem jeweiligen Führungselement in Kontakt tretendes Produkt um die Stapelrichtung herum zu verdrehen. Beispielsweise ist das Führungselement 561 mit einem Antriebselement, etwa einem Schrittmotor, einem kontinuierlich arbeitenden Elektromotor, einem pneumatischen Element, einem hydraulischen Element, u. dgl., in Verbindung, so dass das Führungselement 561 eine entsprechende Drehung seiner Längsachse ausführen kann. In einigen Ausführungsformen ist dabei lediglich ein Teil des Führungselements 561, beispielsweise der obere Teil 561A ein angetriebener Bereich des Führungselements, so dass eine Drehung eines Produkts nur im oberen Bereich erfolgt.

Figur 5b zeigt eine schematische Draufsicht auf die Positioniereinrichtung 560, wobei vier Führungselemente 561, 562, ..., gezeigt sind, die für eine laterale Positionierung der Produkte 252A, 252B sorgen.

Wenn nun ein Produkt von der Positioniereinrichtung 560 aufzunehmen ist, kann ein gewünschter Drehwinkelversatz eingestellt werden, indem vor dem Kontakt des Produkts mit der Positioniereinrichtung 560 das entsprechende Führungselement mit Drehantrieb angesteuert wird, so dass die bereits vorhandenen Produkte entsprechend gedreht werden und nach erfolgter Drehung das neu zu stapelnde Produkt aufgenommen wird, das somit zu dem darunterliegenden Produkt einen gewünschten Drehwinkelversatz aufweist. Die Drehung kann beispielsweise während der entsprechenden Bewegung eines Ausdrückarms vor Kontakt mit den Führungselementen ausgeführt werden. In anderen Varianten, wenn beispielsweise eine Übergabe nicht durch einen Ausdrückarm erfolgt, kann beispielsweise der Winkelversatz dadurch erzielt werden, daß eben ein Bereich des Führungselements gedreht wird, so dass bei Annäherung des Produkts beispielsweise an den oberen Bereich 561A dieser in Drehung versetzt ist oder wird, so dass bei der weiteren Bewegung des Produkts nach unten in Richtung der anderen gestapelten Produkte ein Verdrehen bewirkt wird, während die bereits gestapelten Produkte stationär bleiben. In anderen Ausführungsformen kann der untere Bereich des Führungselements ein angetriebener Bereich sein, so dass bei Eintreffen eines weiteren zu stapelnden Produkts dieses im oberen Bereich in seiner Drehrichtung unverändert bleibt, jedoch die darunterliegenden Produkte entsprechend verdreht werden. Auch eine Kombination der beiden zuvor beschriebenen Varianten ist möglich.

Figur 5c zeigt eine schematische Schnittansicht, in der ein oder mehrere Führungselemente 561, 562 entsprechende Luft- und/oder Gasauslassdüsen 563 aufweisen, mit denen ein zu stapelndes Produkt angeblasen wird, um eine entsprechende Drehung zu bewirken. Beispielsweise kann ein Ausdrückarm 531 ein zu stapelndes Produkt 252B zur Positioniereinrichtung 560 transportieren, das beispielsweise bei Annäherung mit einem entsprechend gerichteten Luft- und/oder Gasstrahl angeblasen und damit in Drehung versetzt wird. Dabei ist beispielsweise der untere Bereich 532 des Ausdrückarms 531 frei drehbar um seine Längsachse, so dass ggf. eine Drehung des Produkts 252B und des unteren Bereichs 532 des Ausdrückarms 531 hervorgerufen wird. In anderen Varianten wird das Produkt 252B bei Annäherung an die Positioniereinrichtung 560 von dem Ausdrückarm 531 gelöst, etwa durch Unterbrechung der Ansaugung u. dgl., so dass dann das gelöste Produkt 252B entsprechend angeblasen und gedreht werden kann. Es sollte auch beachtet werden, daß noch weitere Luft- und/oder Gasauslassdüsen 563 in unterschiedlichen Höhen eines oder mehrerer Führungselemente 561 vorgesehen sein können, um das Anblasen des Produkts 252B über einen längeren Zeitraum hinweg zu ermöglichen. Der erzeugte Drehwinkelversatz kann dabei eingestellt werden durch die Anzahl der pro Längeneinheit vorhandenen Auslassdüsen 563 und /oder die Form der Auslassdüsen 563 und/oder die Austrittsgeschwindigkeit der Luft und/oder des Gases und/oder die Anblasrichtung, und dergleichen.

Insbesondere können die eine oder mehreren Düsen 563 in einem oder mehreren der Führungselemente auch als eine Temperiereinrichtung betrieben werden, da durch das Anblasen ein erhöhter Wärmeaustausch und damit eine verbesserte Temperatursteuerung zumindest lokal in dem Produkt 252B ermöglicht werden. Beispielsweise wird, wenn gleichzeitig eine Erzeugung eines Drehwinkelversatzes erforderlich ist, die Steuerung so vorgenommen, daß dadurch eine Nettodrehung um die Stapelrichtung erreicht wird, während in anderen Situationen, in denen kein Drehwinkelversatz erforderlich, oder unerwünscht ist, ein "richtungsneutrales" Anblasen eingestellt wird.

Wie bereits zuvor erläutert ist, können auch die in Verbindung mit Fig. 5a bis 5c beschriebenen Ausführungsformen in beliebiger Weise mit den zuvor beschriebenen Ausführungsformen kombiniert werden, so dass beispielsweise ein Teil des Winkelversatzes durch eine der zuvor beschriebenen Ausführungsformen eingestellt wird und ein weiterer Teil des Winkelversatzes beispielsweise durch die Positioniereinrichtung 560 erzeugt wird. Es ist auch möglich, abwechselnd einen Drehwinkelversatz durch andere, zuvor beschriebene Ausführungsformen zu erzeugen und einen nächsten Drehwinkelversatz durch die Positioniereinrichtung 560 hervorzurufen. In erfindungsgemäßen Ausführungsformen wird zusätzlich zu der Positioniereinrichtung 560 eine geeignete Zwischenstapelung vorgesehen, die drehbar ist, um beispielsweise die Vorteile zu erhalten, die zuvor beschrieben sind, in Verbindung mit einer Umorientierung der gestapelten Produkte und dergleichen.

In einigen Ausführungsformen (nicht gezeigt) ist eine Inspektionseinrichtung, etwa in Form einer Kamera, eines optischen Sensors, eines Berührungssensors, u. dgl. vorgesehen, so dass zumindest ein charakteristisches Merkmal der zu stapelnden Produkte erfasst werden kann. Durch die Erzeugung eines Drehwinkelversatzes in der Stapelrichtung von zumindest einigen aufeinanderzustapelnden Produkten ergibt sich generell ein größerer "Erfassungswinkel" auch für eine stationär angeordnete Inspektionseinrichtung, so dass zumindest für aufeinanderfolgende Produkte ein größerer Winkelbereich der Produkte inspiziert werden kann. Aber auch der Vorgang der Erzeugung des Drehwinkelversatzes selbst eignet sich in besonderem Maße für die Ausführung eines Inspektionsvorganges, da insbesondere während der Drehung des Produkts eine größere Oberfläche des zu inspizierenden Produkts für einen entsprechenden Sensor u. dgl. zugänglich ist. Das heißt, in vorteilhaften Ausführungsformen wird der Vorgang des Erzeugens des Drehwinkelversatzes genutzt, um durch eine geeignet positionierte Inspektionseinrichtung ein entsprechendes charakteristisches Merkmal, etwa Oberflächenform, Farbe, Vorhandensein charakteristischer Merkmale u. dgl. zu prüfen.

Generell stellt die vorliegende Erfindung somit technische Mittel bereit, um eine gewünschte Stapelfolge, etwa A-B oder A-B-C zu erzeugen, so dass ein geeigneter Stapelabstand selbst für ansonsten identische Produkte gewährleistet werden kann. Dabei kann die Erzeugung des Drehwinkelversatzes zwischen zwei aufeinanderzustapelnden Produkten so erfolgen, daß ein geringer Platzbedarf erforderlich ist und auch die zeitliche Steuerung des Erzeugens des Drehwinkelversatzes kann so eingerichtet werden, daß keine Unterbrechung der Arbeitstakte der Thermoformanlage erforderlich ist, oder zumindest nur einer oder nur eine sehr geringe Anzahl an Takten zusätzlich einzuführen sind, um den gewünschten Drehwinkelversatz zu erzeugen. Ferner müssen zur Erzeugung des Drehwinkelversatzes nur geringe Massen bewegt werden und somit ist auch eine hohe Taktzahl der gesamten Anlage erreichbar.

## Patentansprüche

1. Stapelstation (100) für eine Thermoformanlage (150), die ausgebildet ist,
einen Drehwinkelversatz um eine Stapelrichtung zwischen einem ersten Produkt (152A) und einem in der Stapelrichtung über dem ersten Produkt zu stapelnden zweiten Produkt (152B) zu erzeugen,
wobei der Drehwinkelversatz um die Stapelrichtung der jeweiligen Produkte dadurch erreicht wird, dass ein Teil der Stapelstation (100) drehbar ist,
wobei eine Zwischenstapelaufnahme (220) vorgesehen ist,
die einen verdrehbaren Bereich (222) in Form eines Drehtellers (222) aufweist,
auf welchem die Produkte zwischenzeitlich zu stapeln sind, so dass in einer ersten Position ein erster Drehwinkel, der auch einer unverdrehten Position entsprechen kann, gemeinsam für alle gleichzeitig zu stapelnden Produkte erhalten wird, und in einer zweiten Position des drehbaren Bereichs der Zwischenstapelaufnahme (220) ein Winkelversatz für ein nächstes zu stapelndes Produkt oder ein weiteres Produkt erreicht wird,
wobei ein Antriebsmechanismus (221) vorgesehen ist, der den Drehteller (222) steuerbar um eine zu dem Drehteller senkrechte Drehachse drehen kann, und der Drehteller (222) eine Vielzahl von Stapelorten (224) aufweist und wobei Ausdrückarme (231) vorgesehen sind zum Ausdrücken der Produkte (152) aus einem Index (113) in Richtung zu der Zwischenstapelaufnahme (220) erfolgt,
wobei eine Steuereinheit vorgesehen ist, die geeignet ausgebildet ist, in einem beliebigen Zeitpunkt nach der Ablage der zuvor ausgedrückten Produkte (152) und nachdem die Ausdrückarme (231) aus dem Bereich der Stapelorte (224) entfernt sind, eine Drehung des Drehtellers durch den Antriebsmechanismus (221) auszuführen, so dass, bis auf einen ersten und einen letzten Ausdrückvorgang, eine Drehung des Drehtellers (222) derart erfolgt, dass auch in der gedrehten Position des Drehtellers (222) eine identische Anordnung der Stapelpositionen als Gesamtheit erreicht wird.

2. Stapelstation nach dem vorhergehenden Anspruch, die eine Stapelaufnahme aufweist, wobei die Zwischenstapelaufnahme und die Stapelaufnahme für eine Übergabe des ersten und zweiten Produkts in gestapelter Form von der Zwischenstapelaufnahme zur Stapelaufnahme ausgebildet sind.

3. Stapelstation nach einem der vorhergehenden Ansprüche, die ferner eine Positioniereinrichtung zur Führung und Positionierung des ersten und zweiten Produkts aufweist, wobei die Positioniereinrichtung ausgebildet ist, eine relative Drehung zwischen dem ersten Produkt und dem zweiten Produkt vor Kontakt des ersten und zweiten Produkts zu erzeugen.

4. Stapelstation nach Anspruch 3, wobei die Positioniereinrichtung ausgebildet ist, die relative Drehung zumindest teilweise durch Drehung des ersten Produkts zu erzeugen.

5. Stapelstation nach Anspruch 3 oder 4, wobei die Positioniereinrichtung ausgebildet ist, die relative Drehung zumindest teilweise durch Drehung des zweiten Produkts zu erzeugen.

6. Stapelstation nach einem der Ansprüche 3 bis 5, wobei die Positioniereinrichtung eine Gasaustrittsdüse aufweist, die so dimensioniert und ausgerichtet ist, dass die relative Drehung zumindest teilweise durch Anblasen erzeugt wird.

7. Stapelstation nach einem der Ansprüche 3 bis 6, wobei die Positioniereinrichtung mindestens ein angetriebenes steuerbar drehbares Führungselement aufweist.

8. Stapelstation nach einem der vorhergehenden Ansprüche, wobei jeder Ausdrückarm individuell um die Stapelrichtung drehbar ist.

9. Stapelstation nach einem der vorhergehenden Ansprüche, die eine Antriebseinheit vorgesehen ist, die die Ausdrückarme kollektiv dreht.

10. Stapelstation nach einem der vorhergehenden Ansprüche, die ferner eine Inspektionseinrichtung umfasst, die ausgebildet ist, mindestens ein charakteristisches Merkmal des ersten und/oder zweiten Produkts während und/oder nach der Erzeugung des Drehwinkelversatzes zu erfassen.

11. Stapelstation nach einem der vorhergehenden Ansprüche, die ferner eine Temperiereinrichtung umfasst, die ausgebildet ist, für das erste und/oder zweite Produkt zumindest lokal eine Temperatursteuerung während und/oder nach der Erzeugung des Drehwinkelversatzes auszuführen.

12. Thermoformanlage zur Herstellung von Produkten, mit einem Form- und Stanzbereich, in welchem die Produkte mittels Wärme geformt und gestanzt werden und als Indizes von nicht-vereinzelten Produkten bereitgestellt werden, und einer Stapelstation nach einem der Ansprüche 1 bis 15, der die Indizes aus dem Form- und Stanzbereich zugeführt werden.

13. Thermoformanlage nach Anspruch 12, die ferner eine Entnahmevorrichtung aufweist, die ausgebildet ist, Produkte aus der Stapelstation aufzunehmen und die aufgenommenen Produkte für die Entnahme weiter zu transportieren, und insbesondere die aufgenommenen Produkte umzuorientieren, so dass die Stapelrichtung von zumindest einigen aufgenommenen Produkten geändert, insbesondere um 90° gekippt, wird.

## Claims

1. A stacking station (100) for a thermoforming apparatus (150) configured to
generate a rotational angle offset about a stacking direction between a first product (152A) and a second product (152B) to be stacked in the stacking direction over the first product,
wherein the rotational angle offset about a stacking direction between each said product is achieved through a rotatable portion of the stacking station (100),
wherein an intermediate stack receptacle (220) is provided,
which comprises a rotatable portion (222) in the shape of a turntable (222),
on which the products are to be stacked in the interim, such that in a first position a first rotational angle, which can correspond to a non-rotated position, is achieved for all products to be stacked simultaneously and that in a second position of the rotatable portion of the intermediate stack receptacle (220) a rotational angle offset for the next product to be stacked or a further product is achieved,
wherein a drive mechanism (221) is provided, which can rotate the turntable (222) controllably around a rotational axis perpendicular to the turntable, and wherein the turntable (222) comprises a multitude of stacking locations (224) and wherein ejection arms (231) for ejecting the products (152) from an index (113) into the direction of the intermediate stack receptacle (220) are provided,
wherein a control unit is provided, which is suitably adapted to execute a rotation of the turntable utilizing the drive mechanism (221) at any point in time after the previously ejected products (152) have been deposited and after the ejection arms (231) are removed from the area of the stacking locations,
such that, except for a first and last ejection process, one rotation of the turntable (222) is executed, such that in the rotated position of the turntable (222) an identical arrangement of stacking positions as a whole is achieved as well.

2. The stacking station according to the preceding claim, which comprises a stack receptacle, wherein the intermediate stack receptacle and the stack receptacle are provided to enable a transfer of the first and second products in a stacked state from the intermediate stack receptacle to the stack receptacle.

3. The stacking station according to any of the preceding claims, further comprising positioning means for guiding and positioning the first and second products, the positioning means being arranged to generate relative rotation between the first product and the second product prior to contact of the first and second products.

4. The stacking station according to claim 3, wherein the positioning means is adapted to generate the relative rotation at least partially by rotation of the first product.

5. The stacking station according to claim 3 or 4, wherein the positioning means is adapted to generate the relative rotation at least partially by rotation of the second product.

6. The stacking station according to one of claims 3 to 5, wherein the positioning means comprises a gas outlet nozzle which is dimensioned and oriented so that the relative rotation is generated at least partially by blowing.

7. The stacking station according to one of claims 3 to 6, wherein the positioning means comprises at least one driven controllably rotatable guide member.

8. The stacking station according to one of the preceding claims, wherein each ejection arm is individually rotatable about the stacking direction.

9. The stacking station according to one of the preceding claims, wherein a drive unit is provided which rotates the ejection arms collectively.

10. The stacking station according to one of the preceding claims, further comprising an inspection device which is designed to detect at least one characteristic feature of the first and/or second product during and/or after the generation of the rotational angle offset.

11. The stacking station according to one of the preceding claims, further comprising a temperature control unit, which is designed to perform at least locally for the first and/or second product a temperature control during and/or after the generation of the rotational angle offset.

12. A thermoforming apparatus for manufacturing products, comprising a forming and punching portion in which the products are thermoformed and punched and provided as indices of non-separated products, and a stacking station according to any one of claims 1 to 15, to which the indices from the forming and punching portion are supplied.

13. The thermoforming apparatus of claim 12, further comprising an unloading device configured to receive products from the stacking station and to further transport the collected products for unloading, and especially to reorient the received products so that the stacking direction of at least some of the received products is changed, especially by 90°.

## Revendications

1. Station d'empilage (100) pour une installation de thermoformage (150), qui est conçue pour
produire un décalage angulaire de rotation autour d'une direction d'empilage entre un premier produit (152A) et un second produit (152B) à empiler dans la direction d'empilage au-dessus du premier produit,
dans laquelle le décalage angulaire de rotation autour de la direction d'empilage des produits respectifs est obtenu en faisant tourner une partie de la station d'empilage (100),
dans laquelle un réceptacle d'empilage intermédiaire (220) est prévu,
qui présente une région rotative (222) sous la forme d'un plateau tournant (222),
sur lequel les produits doivent être empilés de manière intermittente de sorte que, dans une première position, un premier angle de rotation pouvant également correspondre à une position non tournée est obtenu conjointement pour tous les produits à empiler simultanément, et que, dans une seconde position de la région rotative du réceptacle d'empilage intermédiaire (220), un décalage angulaire est obtenu pour un produit à empiler ensuite ou pour un autre produit,
dans laquelle un mécanisme d'entraînement (221) est prévu, qui peut faire tourner le plateau tournant (222) de manière commandée autour d'un axe de rotation perpendiculaire au plateau tournant, et le plateau tournant (222) présente une pluralité d'emplacements d'empilage (224), et dans laquelle des bras d'expulsion (231) sont prévus afin d'expulser les produits (152) à partir d'un index (113) en direction du réceptacle d'empilage intermédiaire (220),
dans laquelle une unité de commande est prévue, qui est conçue de manière appropriée pour mettre en œuvre une rotation du plateau tournant grâce au mécanisme d'entraînement (221) à un moment quelconque après la dépose des produits (152) précédemment expulsés et après que les bras d'expulsion (231) ont été éloignés de la région des emplacements d'empilage (224), de sorte que, à l'exception de la première et de la dernière opération d'expulsion, une rotation du plateau tournant (222) intervient de telle manière que, même dans la position tournée du plateau tournant (222), un agencement identique des positions d'empilage dans leur ensemble est obtenu.

2. Station d'empilage selon la revendication précédente, présentant un réceptacle d'empilage, dans laquelle le réceptacle d'empilage intermédiaire et le réceptacle d'empilage sont conçus pour transférer les premier et second produits sous une forme empilée depuis le réceptacle d'empilage intermédiaire vers le réceptacle d'empilage.

3. Station d'empilage selon l'une quelconque des revendications précédentes, présentant en outre un dispositif de positionnement permettant de guider et positionner les premier et second produits, dans laquelle le dispositif de positionnement est conçu pour produire une rotation relative entre le premier produit et le second produit avant un contact des premier et second produits.

4. Station d'empilage selon la revendication 3, dans laquelle le dispositif de positionnement est conçu pour produire la rotation relative au moins partiellement en faisant tourner le premier produit.

5. Station d'empilage selon la revendication 3 ou 4, dans laquelle le dispositif de positionnement est conçu pour produire la rotation relative au moins partiellement en faisant tourner le second produit.

6. Station d'empilage selon l'une quelconque des revendications 3 à 5, dans laquelle le dispositif de positionnement présente une buse de sortie de gaz dimensionnée et orientée de sorte que la rotation relative est produite au moins partiellement par soufflage.

7. Station d'empilage selon l'une quelconque des revendications 3 à 6, dans laquelle le dispositif de positionnement présente au moins un élément de guidage entrainé pouvant tourner de manière commandée.

8. Station d'empilage selon l'une quelconque des revendications précédentes, dans laquelle chaque bras d'expulsion peut tourner individuellement autour de la direction d'empilage.

9. Station d'empilage selon l'une quelconque des revendications précédentes, dans laquelle une unité d'entrainement est prévue, qui fait tourner les bras d'expulsion de manière collective.

10. Station d'empilage selon l'une quelconque des revendications précédentes, comprenant en outre un dispositif d'inspection conçu pour détecter au moins un attribut caractéristique du premier et/ou du second produit pendant et/ou après la production du décalage angulaire de rotation.

11. Station d'empilage selon l'une quelconque des revendications précédentes, comprenant en outre un dispositif de régulation de température conçu pour mettre en œuvre au moins localement une commande de température pour le premier et/ou le second produit pendant et/ou après la production du décalage angulaire de rotation.

12. Installation de thermoformage pour la fabrication de produits, comprenant une région de formage et de découpage au sein de laquelle les produits sont formés et découpés au moyen de chaleur et sont fournis sous la forme d'index de produits non séparés, et une station d'empilage selon l'une quelconque des revendications 1 à 15 jusqu'à laquelle les index sont acheminés depuis la région de formage et de découpage.

13. Installation de thermoformage selon la revendication 12, présentant en outre un dispositif de prélèvement conçu pour accueillir des produits issus de la station d'empilage et pour transporter plus avant les produits accueillis en vue du prélèvement, et en particulier pour réorienter les produits accueillis, de sorte que la direction d'empilage d'au moins certains produits accueillis est modifiée, en particulier est basculée de 90°.
